# EUROPEAN PATENT APPLICATION

(11) **EP 1 829 605 A1**
(43) Date of publication of application: **05.09.2007**
(21) Application number: 05818726.1
(22) Date of filing: 13.12.2005
(51) Int. Cl.: B01F 7/12, B01F 7/28, B29B 7/40, B29B 7/50

(54) **AN APPARATUS FOR PROCESSING MATERIALS**

(30) Priority: 13.12.2004 US 635905 P; 11.05.2005 US 680300 P; 09.06.2005 US 689649 P; 09.09.2005 CN 200510029546
(71) Applicant: Accelergy Shanghai R&D Center, Pudong, Shanghai (CN); Accelergy Corporation, Palo Alto, CA 94303 (US)
(72) Inventor: WANG, Youqi, Palo Alto, CA 94303 (US); CONG, Peijun West First Floor, Building 5, Pudong, Shanghai 2012 (CN); WANG, Guilin West first floor, Building 5, Pudong, Shanghai 201203 (CN); WANG, Wenhui West first floor, Building 5, Pudong, Shanghai 201203 (CN); DIAO, Lichen West first floor, Building 5, Pudong, Shanghai 201203 (CN); KANG, Youshu West first floor, Building 5, Pudong, Shanghai 201203 (CN); ZHONG, Yubin West first floor, Building 5, Pudong, Shanghai 201203 (CN); TANG, Bohejin West first floor, Building 5, Pudong, Shanghai 201203 (CN); HUANG, Fuxin West first floor, Building 5, Pudong, Shanghai 201203 (CN)
(74) Representative: Williams, Richard Andrew Norman
(86) International application number: PCT/CN2005/002177
(87) International publication number: WO 2006/063516

(57) **Abstract**

The present invention discloses an apparatus for processing materials, which is used to process the materials introduced thereinto, comprising a working part and a driving part, wherein the working part comprises, in cylindrical form, a first element and a second element arranged within the first element, and a containing chamber for storing materials to be processed being formed by the gap between the first element and the second element, and the second element is driven by the driving part to rotate relatively to the first element, and on the surface of the second element toward the containing chamber, provided is a disturbing part capable of producing axial forces in a direction parallel to the axis of the first element. Thanks to the disturbing part of the second element, the apparatus of the present invention can process materials thoroughly, control retention time of materials within the containing chamber, prevent materials from entering into the mixing blind area and thus make all materials processed thoroughly.

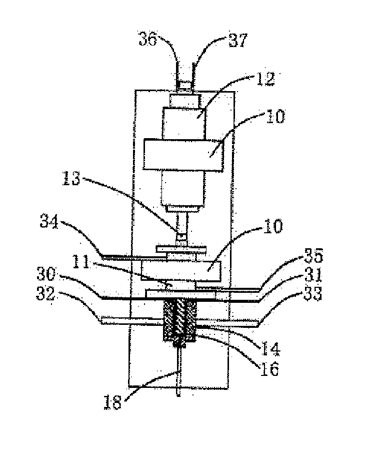

## Description

### FIELD OF THE INVENTION

The invention relates to apparatus for processing materials and its application.

### BACKGROUND OF THE ARTS

Materials mixing process is a greatly pivotal step for food industry, chemical industry, extraction technique and the like. For example, through mixing process, soluble solids, liquids or gases can be thoroughly dissolved in solvent to form uniform solution; insoluble solid particles, gases or liquids can be transitorily distributed in solvent to form suspension; slightly soluble liquids can be distributed as droplets in solvent to form emulsion; convection among reactants can be promoted to reduce localized concentration difference and accordingly to achieve thorough reaction; convection in the solution can be promoted to reduce localized temperature difference and accordingly to make heat released uniformly and keep the temperature thereof consistent. Up to now, there are many existing methods used in mixing process.

The most direct method for mixing is to stir materials at high speed within a container. There are many kinds of stirrers in the market. The most common stirring method is to have one or more stirring pole(s) quickly move within a container, liquids are mixed to a certain extent after a long period. For example, after being stirred for many times, the mixture of oil and water becomes a liquid in a proper emulsification state.

In order to get sufficient space for stirring pole(s), a container with a large volume is required. However, such a big container is not suitable for mixing liquids in microscale, and also not suitable for mixing a gas and a liquid. Furthermore, speed of such mixer is limited to be not too high, otherwise liquids will splash. Automation and efficiency are low for a plurality of mixing processes because cleanness after each mixing process is required. If a gas reactant is produced during the mixing reaction, it is not convenient to collect the produced gas in such a big container. If the mixture needs to be heated or cooled during the reaction process, it is not easy to be uniformly heated or cooled within such a big container, which will result in the nonuniform reaction. Therefore, as to the method of using stirring pole(s) to mix materials within a container, mixing efficiency is not good.

Another method is to have a cylindrical rotor coaxially arranged within a stator with a cylindrical hole. The two opposite cylindrical surfaces of stator and rotor form a narrow annular chamber. After injecting fluids into the annular chamber and the rotor rotating at high speed, great shear forces drive fluids in relative movement with each other to achieve mixing. When rotation speed reaches to a certain amount, the centrifugal forces of rotor can make fluids form Coutte Flow. Mixing efficiency of Coutte Flow is very high, especially for manifold immiscible fluids, because Coutte Flow can scatter those immiscible fluids into small particles to enlarge the contacting area among fluids, in order to improve the mixing efficiency.

However, when surface rotation speed of rotor exceeds a specific amount, flowing fluids within annular chamber will become instable and Taylor vortices appear. Taylor vortices cause fluids to form a plurality of independent microcirculations and fluids circulate within their vortices in defect of exchange with outer fluids of other vortices. Further, relative speed and pervasion speed between layers within each vortice are low. These two factors induce a low mixing efficiency when Taylor vortices appear. Furthermore, Taylor vortices will jam annular chamber in the transversal direction of rotor shaft, which will lower the speed of fluids entering into the annular chamber. Furthermore, Taylor vortices will consume large amount energy, which is not good for saving energy.

In order to solve above-mentioned issues, US patents 6,471,392 and 6,742,774 and 5,538,191 separately disclose the use of Coutte Flow to mix fluids and claim a proper matching of annular chamber size, surface characteristics and rotor rotation speed can avoid Taylor vortices. These patents avoid Taylor vortices through two factors, one is that annular chamber thickness is less than or equal to the total layer thicknesses of fluids on the surfaces of rotor and stator, namely, the gap is small enough to avoid Taylor vortices. Another is that the cylindrical surfaces of the rotor and the stator are smooth enough to restrain the Taylor vortices appearance.

However, according to the Taylor vortices theory, when the function value of Taylor coefficient consisting of the rotation speed, the radius of the annular chamber and the fluid viscosity exceeds a critical value, whatever the gap thickness of the annular chamber is, Taylor vortices will appear. For example, when the fluid properties and the annular chamber size are fixed, as long as the rotation speed is high enough, it is possible that Taylor vortices appear. Therefore, for those annular chambers manufactured according to the above mentioned patents, Coutte Flow appears only at a certain rotation speed and the certain fluid viscosity. When the rotation speed exceeds the certain amount and the fluid viscosity is less than the certain amount, Taylor vortices will appear.

In some cases, the annular chamber has to work at a speed higher than the critical rotation speed, with the fluid viscosity possibly lower than the critical viscosity, so appearance of Taylor vortices can not be avoided. Therefore, it is a conflict unsolved all through between enhancing the rotation speed to bring about Taylor vortices and mixing efficiency. We have to make compromise between enhancing the rotation speed and avoiding Taylor vortices under the condition of the existing mixing techniques.

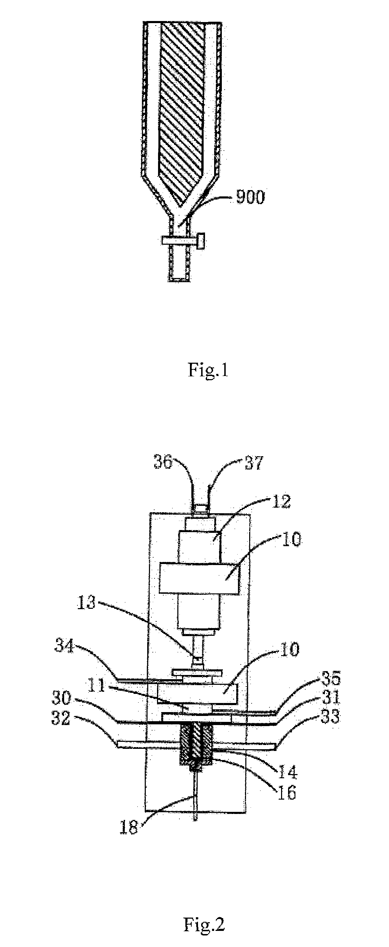

Please refer to Figure 1. During the rotation process of the existing rotors, incompletely mixed fluids will outflow from bottom outlet(s) of the annular chamber due to gravity, which may reversely affect the efficiency of mixing and reaction. To prevent fluids outflow, valve(s) are commonly arranged on the bottom outlet(s). However, it is inevitable to involve a certain volume of mixing "blind area" shown as 900 between the valve(s) and the annular chamber, where fluids can not be mixed thoroughly and become waste fluids, resulting in the waste of the raw materials.

Therefore, it is desirable to provide a new apparatus for processing materials in order to solve those limitations in the prior art.

### SUMMARY OF THE INVENTION

One aspect of the present invention relates to an apparatus for processing materials capable of processing materials incorporated therein thoroughly.

To achieve the above-mentioned object, one aspect of the present invention is to provide an apparatus for processing materials which comprises a working part and a driving part, wherein, the working part comprises a first element and a second element arranged within the first element, and a containing chamber for storing materials to be processed is formed by the gap between the first element and the second element, the second element is driven by the driving part to rotate relativly to the first element, the surface of the first element or the second element toward the containing chamber is non-smooth. Further, method for processing materials comprises one or more of mixing, emulsification, microemulsification, polymerization, extraction, reaction, preparation and the like. Furthermore, the non-smooth surface of the second element can not contact the first element when it rotates relativly to the first element.

In another embodiment, the surfaces both of the first element and of the second element towards the containing chamber are non-smooth.

In another embodiment, the non-smooth surface of the first element towards the containing chamber is a disturbing part capable of producing axial forces in a direction parallel to the axis of the first element.

In another embodiment, the non-smooth surface of the second element towards the containing chamber is a disturbing part capable of producing axial forces in a direction parallel to the axis of the first element.

Comparing with the prior art, the non-smooth surface or the disturbing part of the second element of the apparatus for processing materials of the present invention has functions like disturbing Taylor vortices, increasing mixing efficiency, controlling retention time of fluids within the chamber and preventing liquids from flowing into "blind area", so all the fluids within the apparatus can be mixed thoroughly. Therefore, the apparatus of the present invention can mix materials thoroughly, control retention time of the materials within the containing chamber and make all the materials mixed or reacted thoroughly, etc.

In another embodiment, the first element 15 is a stationary stator, and the second element 16 is a rotor capable of high speed rotation. In another embodiment, the first element 15 and the second element 16 are cylinders, the first element 15 has a cylindrical hole along its axial direction, and the second element 16 is arranged within the cylindrical hole and shares the common shaft of the first element 15.

In another embodiment, at least one dimensional size of the containing chamber 17 formed from the gap between the first element and the second element is on the order of micrometers. For example, the thickness of the containing chamber 17 is on the order of micrometers, such as from tens of microns to thousands of microns. Further, the thickness of the containing chamber 17 can be set as 50-80 microns, 80-120 microns (e.g.100 microns), 120-130 microns, 130-200 microns (e.g. 200 microns), 200-350 microns, around 350 microns,1000 microns, 2000 microns, 3000 microns, etc. Although the thickness is very small and the surface of the second element 16 towards the containing chamber is non-smooth, the second element 16 can not contact the first element 15 when the second element 16 rotates relativly to the first element 15.

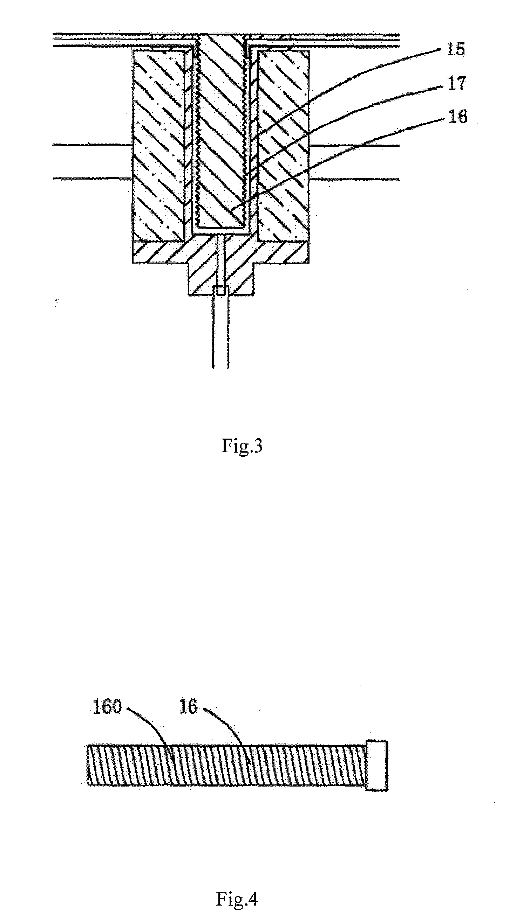

In another embodiment, referring to Figure 3 and Figure 4, the non-smooth surface of the second element 16 towards the containing chamber 17 is arranged as a disturbing part 160, which can be formed integrally on the surface of the second element 16 through micro-mechanical process, electric corrosion, photoetching or other means, and also can be attached to the surface of the second element 16 through electroplating, tightly gluing or other means. Disturbing part 160 can be in any form as long as it can provide axial forces parallel to the axis of the first element when it rotates. However, whatever the form of the disturbing part 160 is and whatever the depth protruding into the containing chamber 17 is, it can not collide with the first element 15 when the second element 16 rotates relativly to the first element 15. Namely, wherever the disturbing part 160 is located, it will be within the containing chamber 17.

In another specific embodiment, the disturbing part 160 can be protruding or recessed, arranged on the surface of the second element 16. In another embodiment, the protruding extent or recessed extent of the disturbing part 160 can be in the range of about 1%-300% of the average thickness of the containing chamber 17. For example, when the chamber thickness is set at 100 microns, the distance between the most protruding point and the most recessed point along radial direction of the second element 160 can be in a range of about 1-300 microns. In another embodiment, protruding or recessed extent of the disturbing part 160 can be in a range of about 5%-100% of the average thickness of the containing chamber 17. In another preferred embodiment, protruding or recessed extent of the disturbing part 160 can be in a range of about 10%-30% of the average thickness of the containing chamber 17. Protruding extent and/or concave extent of the disturbing part 160 on the surface of the second element 16 may be the same or different.

In another embodiment, the section area of the disturbing part 160 on the second element 16 is less than 50% of that of the surface of the second element 16. In a preferred embodiment, the section area of the disturbing part 160 is in a range of 10%-40% of that of the surface of the second element 16.

In another embodiment, the disturbing part 160 is an array of plurality of dots, or continuous stripes or discontinuous stripes, or the combination of dots and stripes. In another embodiment, the disturbing part 160 is arranged on the surface of the second element 16 randomly or in regular order. In another embodiment, direction of each stripe is random as long as the direction is not vertical or parallel to axial direction of the second element 16. In another embodiment, stripe-like disturbing part 160 is arranged continuously or discontinuously from bottom to top of the second element 16. In another embodiment, stripes can be equi-spaced or unequi-spaced, or there are crossings among stripes. In another embodiment, the disturbing part 160 comprises, without any limitation, a plurality of continuous and equi-spaced stripes as shown in Figure 4.

In another embodiment, the sectional shape of the disturbing part 160 comprises, but not limited to, triangle, trapezoid, square figure, any polygon, semicircle, semi ellipse, or any combination of the above. Triangular disturbing part 160 shown in Figure 4 is only one thereof.

In another embodiment, referring to Figure 4, the disturbing part 160 is continuous stripes. When the second element 16 rotates, crossing point of a continuous stripe of the disturbing part 160 and tangential plane of the surface of the second element 16 is continuously floating. Floating direction of the crossing point is the trend direction of the corresponding stripe. Trend direction of the disturbing part 160 can be random as long as its rotation direction in general is reverse to or same as the rotation direction of the second element 16. When all or most stripes share the same trend direction, there will produce an impulse force along the trend direction against fluids. The impulse force may form a component force along the direction parallel to the axis of the first element 15, which drives fluids to flow along rotation shaft or the axial direction of the second element. Trend direction of the disturbing part corresponds to rotation direction of the second element 16. When the second element rotates, according to the relationship between rotation direction and trend direction of the disturbing part, the disturbing part 160 can provide forces in a direction towards inlet 31 and/or 32 so that the retention time of fluids within the containing chamber 17 can be extended. Disturbing part may also provide forces in a direction toward outlet 18 so that the retention time of fluids within the containing chamber 17 can be lessened.

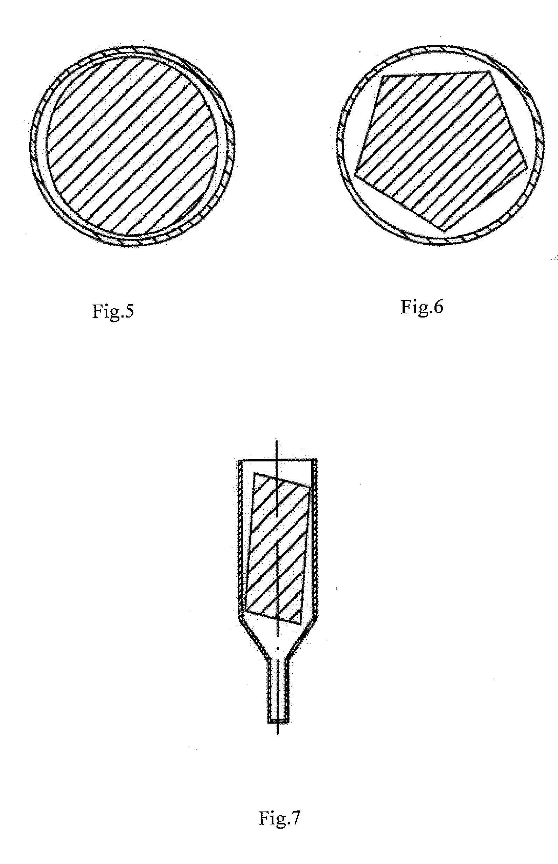

In another embodiment, referring to Figure 5 and 6, the sectional shape of the second element 16 can be polygon or ellipse, and in this way, when the second element 16 is in high speed rotation, width of any fixed position within the containing chamber 17 will vary with the rotation. Accordingly, fluids within the containing chamber 17 are unevenly pressed and thoroughly mixed. Of course, the sectional shape of the second element 16 can also be other shapes and ellipse in Figure 5 or polygon in Figure 6 is just two examples.

In another embodiment, referring to Figure 7, the second element 16 can have a different shaft from that of the first element 15. Based on the similar teachings as above-mentioned, fluids within the containing chamber 17 can also be unevenly pressed and thoroughly mixed.

In another embodiment, the first element 15 and the second element 16 can exchange their positions, namely, the second element 16 is a stationary stator and the first element 15 is a rotor capable of high speed rotation. In another embodiment, the first element 15 and the second element 16 can be rotating elements with opposite direction; and also can be elements with different rotation speeds. In another embodiment, the first element 15 and the second element 16 can be of any shape and close to each other, such as close patches, as long as the space between them can form the containing chamber 17 for storing fluids. In another embodiment, the disturbing part 160 can alternatively be arranged on the first element 15 and/or the second element 16.

In another embodiment, inner surface of the first element (namely the surface of the first element toward the containing chamber) is arranged with a first disturbing part, and the outer surface of the second element (namely the surface of the second element toward the containing chamber) is arranged with a second disturbing part. In another embodiment, the first disturbing part on the first element shares the same trend direction with the second disturbing part on the second element. In another embodiment, the first disturbing part on the first element has an opposite trend direction to the second disturbing part on the second element.

In another embodiment, on the top of the containing chamber 17, there are two inlets 30 and 31 for feeding materials into the chamber 17, and on the bottom of it, there is outlet 18. Inlets 30, 31 and outlet 18 can be located on other positions of the containing chamber 17 if needed. Inlet 30, 31 and outlet 18 are all communicated with the containing chamber 17. They can be any element capable of making materials enter into or vent from the containing chamber 17, such as a pipe or a valve or the like. In another embodiment, Inlets 30, 31 and outlet 18 can be same element or device, and can also be different element or device.

In another embodiment, when materials to be processed are mixed fluids, it is feasible to arrange only one inlet on the apparatus of the present invention. In another embodiment, when there are a plurality of materials to be processed needed to be mixed and/or reacted, a plurality of inlets can be arranged. In another embodiment, a plurality of inlets can be arranged in advance to be chosen therfrom when needed during the reaction process.

Materials to be processed are fed into the annular containing chamber 17 through inlets 30 and 31, and under the common action of high shear forces, high centrifugal forces and axial forces from the second element 16, they are mixed rapidly and uniformly. Materials can be mixed thoroughly, and further reacted thoroughly if they can react with each other.

Based on the apparatus of the present invention, the flow state of fluids within the containing chamber 17 may be laminar flow, and also may be turbulent flow. Forces produced by the high speed rotation of the second element 16 drive fluids in laminar flow and divide them into a plurality of lamellas. In the radial direction of the annular containing chamber 17, due to the different flow rate of lamellas, one fluid lamella can contact other lamellas rapidly and closely to diffuse rapidly, and accordingly, fluids are mixed thoroughly. According to Taylor Coutte Flow theory, after working part being manufactured with a certain size, gap of the containing chamber 17 is fixed accordingly. For fluids with different viscosity and under different rotation speed of rotor, whether Coutte Flow or Taylor vortices appear or not depends on Taylor coefficient. When rotor rotates at low speed, fluids flow in a laminar flow within the containing chamber 17, and under this condition mixing efficiency is relatively good; but due to the low rotation speed, flow rate of the fed fluids can not be large, otherwise, fluids will flow out quickly after passing through the containing chamber 17 along its axial direction, so that mixing efficiency can not reach a high level. In order to mix fluids with good efficiency and large flow rate, rotation speed of rotor must be increased; however this may bring Taylor vortices and lower the mixing result. Apparatus for processing materials of the present invention, through the axial forces produced by the disturbing part 160 arranged on the second element 16, disturbs Trylor vortices arranged along the direction vertical to the axial direction of the second element 16 and destroys those closed fluid cells formed by Taylor vortices. Therefore, fluids within and out of vortices exchange with each other and mixing efficiency is improved accordingly. On the other hand, the disturbing part 160 also disturbs the independent microcirculations within each vortice and promotes fluids within microcirculations to be stirred and mixed. Based on the above, thanks to the disturbing part 160 arranged on the second element 16, the mixing efficiency within the apparatus of the present invention can be free of the effects of feeding flow rate and rotation speed. Particles of the mixed fluids through the present invention apparatus are very small, and their radius can be on the order of nanometers. Accordingly, efficiency of mixing and/or reaction is improved greatly.

Besides disturbing Taylor vortices and improving mixing efficiency, the disturbing part 160 also have the function of controlling the retention time of fluids within the containing chamber 17. Trend direction of the disturbing part 160 may be opposite to rotation direction of the second element 16. When the second element 16 is in high speed rotation, the disturbing part 160 produces upward axial forces to prevent fluids within the containing chamber 17 from falling down. Therefore, all the fluids are limited within the containing chamber 17, which ensures that the fluids have enough time to mix and react and at the same time prevents fluids flowing into "blind area" so as to ensure that all the fluids within the containing chamber 17 can mix and/or react thoroughly. After mixed and /or reacted, fluids fall down to outlet 18, under pressure imposed on the top of the containing chamber 17; or under the conditions that the second element 16 is driven in an opposite rotation, namely trend direction of the disturbing part 160 is the same with rotation direction of the second element 16, and that the disturbing part 160 will produce downward axial forces to promote fluids within the containing chamber 17 falling down to outlet 18.

Based on the identical theory, in some cases the working part needs to be invertedly arranged, the disturbing part 160 also has the above mentioned functions.

Based on the above, flow state can be controlled to a certain extent by the use of the axial forces from the disturbing part 160. The controlling comprises, but not limited to, controlling the retention time of fluids within the working part, promoting fluids to flow out of the working part, altering flow rate of fluids out of the working part, increasing or decreasing resistance upon materails when being fed into the working part, etc.

In another embodiment, the apparatus of the present invention further comprises an interconnecting part 13 and a shaft block 11 coupled with the second element 16; the second element 16 is connected with shaft of the driving part 12 through interconnecting part 13; the second element 16, passing through shaft block 11, together with the first element 15 form the annular containing chamber 17.

In another embodiment, the apparatus of the present invention may comprise interconnecting part 13 being used to connect driving part 12 and the second element 16, and consequently driving part 12 can drive the second element 16 rotate. Driving part 12 can be an electro-motor or any other device that can provide power to drive the second element 16. The highest rotation speed of the second element 16 is decided by power and torque moment of driving part 12. Usually, the bigger power and torquemoment will bring higher rotation speed. In another embodiment, the highest rotation speed of the second element 16 is 10350 rounds per minute. According to different characteristic of different fluids, selecting proper or higher rotation speed can make mixing and/or reaction achieve practically needed efficiency or better efficiency. In another embodiment, when the rotation speed of the second element 16 is more than 3000 rounds per minute, such as 3000 rounds per minute, 5000 rounds per minute, 6000 rounds per minute, 8000 rounds per minute, 9000 rounds per minute or the like, particle radius of products can be up to micrometers or nanometers. Rotation speed can reach a higher level by choosing proper driving part 12 as required. Working temperature of the working part can be set at -150□ to 300□, such as - 150□ to 50□,-50□ to 100□, 20□ to 250□, 150□ to 300□, and the like.

In another embodiment, the apparatus of the present invention may further comprise one or more first temperature controlling part(s) 14. The first temperature controlling part 14 can be arranged on the part or whole periphery of the containing chamber 17, or other positions of the working part. The first temperature controlling part 14 may comprise openings 32, 33, for example valves or pipes or the like, through which the first temperature controlling part 14 can be filled with fluids to alter the temperature of the working part rapidly. In another embodiment, since mixing reaction may produce heat or absorb heat, fluids are circularly injected into the first temperature controlling part 14 of the working part through opening 32, and then flow out through opening 33 after a full heat exchange so as to take off or in heat circularly. When the second element 16 rotates at high speed, shear friction forces may make fluids within the containing chamber 17 produce large amount of heat. To prevent heat from reversly affecting the mixing reaction, cold fluids are circularly pressed into the first temperature controlling part 14 through opening 32 and then flow out through opening 33 after fully exchanging heat with the containing chamber 17. In another embodiment, if chemical reaction within the containing chamber 17 needs heat and heat produced by friction is insufficient, circulating fluids with high temperature can be injected into the first temperature controlling part 14 to heat the containing chamber 17. Since the walls of the containing chamber 17 and the first element 15 are very thin, circulating fluids at a certain temperature can exchange heat rapidly with fluids in mixing reaction process to make these fluids at nearly same temperature with circulating fluids. Furthermore, the containing chamber 17 is so narrow that the fluids temperature therein can easily be in uniformity, which is useful for the uniformity of reaction. Temperature in the containing chamber 17 can be set and kept constant through the first temperature controlling part 14, which can also meet special temperature requirement in some mixing reactions.

In another embodiment, the apparatus of the present invention may further comprise one or more second temperature controlling part(s). The second temperature controlling part is arranged on the shaft block 11. The second temperature controlling part may comprise openings 34, 35, such as valves or pipes or the like, through which shaft block 11 can be filled with fluids such as shaft bearing oil or water by the second temperature controlling part to alter its temperature rapidly. In another embodiment, when the second element 16 is in high speed rotation, shaft bearing within shaft block 11 will become heated, so fluids are injected into shaft block 11 through opening 34, and then flow out through opening 35 to take off heat and lubricate the shaft bearing. In another embodiment, due to the top of the second element 16 extending into shaft block 11, the second temperature controlling part can control temperature of the second element 16 at the same time. According to the selected temperature of the containing chamber 17, temperature of the second temperature controlling part can be properly set to ensure that temperature of the top of the second element 16 is the same with the temperature of its bottom within the containing chamber 17. In this way, heat exchange, which is caused by temperature difference between the top and the bottom of the second element 16 and may induce heat loss or heat gain within the containing chamber 17, is prevented.

In another embodiment, the apparatus of the present invention may further comprise one or more third temperature controlling part(s). The third temperature controlling part is arranged on the driving part 12. The third temperature controlling part may comprise openings 36, 37, for example valves or pipes or the like, through which the driving part 12 can be filled with fluids to alter its temperature rapidly. Fluids are injected into the driving part 12 through opening 36, and after inner circulation, flow out through opening 37 to take off heat from the driving part 12. For example, when the driving part 12 rotates at high speed and produces large amount of heat, water-cooling process can be used to lower its temperature.

In another embodiment, the apparatus of the present invention may be arranged on a workbench through supporting device, and its mounting mode can be vertical or horizontal or in any other needed angle to the workbench. The supporting device may comprise a foundation 9 and a supporting frame 10, wherein the foundation 9 is arranged on the workbench and the supporting frame 10 is used to fix the driving part 12 and the working part on the foundation 9.

In another embodiment, elements or components subjected to the apparatus of the present invention may be manufactured from same or different materials. According to the characteristics of the materials to be processed and the products, mixing and/or reaction conditions, costs and other factors, the elements of the present apparatus may be made from cast iron, stainless steel, alloy, aluminum or other metallic materials, and also can be made from plastic, glass, quartz glass or other organic materials, and also can be made from ceramic material or other inorganic materials. For example, in a detailed embodiment, the first element 15 and the second element 16 are made of stainless steel to ensure the apparatus of the present invention capable of handling materials of high causticity.

The present invention further relates to application of the above mentioned apparatus for processing materials, namely another aspect of the present invention relates to a method for processing materials, said method comprises the following steps: providing at least two materials; providing a containing chamber for storing materials to be processed, which is formed by a first element and a second element arranged within the first element, and the second element can rotate relativly to the first element under the action of external force, with the surface of said second element toward the containing chamber being non-smooth; feeding said materials into the containing chamber to be processed.

Further, the application of said apparatus for processing materials comprises uniformization, dispersion, emulsification, microemulsification, extraction, reaction, preparation of materials. In another embodiment, the application further comprises a step of product analysis. Below, said application will be described in more detail, but the application shall not be limited to the listed.

### 1. Rapid mixing, uniformization and dispersion of two or more kinds of liquids

The apparatus of the present invention can be used for rapid mixing, uniformization and dispersion of two or more kinds of fluids, wherein, said fluids include polymer, coating, pigment, dye, ink, paint, adhesive, lubricant oil, additive, surfactant, emulsifying agent, glycerin, gasoline, crude oil, diesel oil, heavy oil, water, organic solvent, ionic liquid, paraffin oil, food or feedstuff, and the like. Fluids are commonly as solution, and also can be as emulsion, microemulsion, colloid or other liquid form, if the original mixed materials to be processed are in form of solid, they can be dissolved by solvent or heated to melt.

Further, the methods used for analyzing the processed samples comprise one or more selected from the following: optical microscopical image analysis (OM), scanning electron microscopical image analysis (SEM), atomic force microscopical image analysis (AFM), Transmission electron microscopical image analysis (TEM). In general, these analysis methods are used to analyze uniformity and dispersity of a mixture, as well as the size of droplets or particles thereof.

Mixing, uniformization and dispersion are not only key factors to evaluate the quality of mixture, but also main parameters to assess mixing performance of systemetical method. In some cases, uniform mixing and dispersion of two or more types of materials are in favor of greatly improving physical properties of materials, for example, changeing density, molecular weight, viscosity, pH value and the like. Therefore, mixing, uniformization and dispersion process of the present invention may also be extended to more comprehensive mixing processes, namely, said process of uniformization and dispersion can be between inorganic substances, between organic substances, between organic substance and inorganic substance, between substances with low viscosity, between substances with middle viscosity, between substances with high viscosity, between substances with rather different viscosity. The form of said organic substance or inorganic substance can be solution, and also can be emulsion, microemulsion, colloid or other form of liquids, if starting substances to be mixed are solids, they can be dissolved by solvent or heated to melt. The uniformization and dispersion process of the present invention is particularly suitable for heterogeneous liquid phase mixture system.

### 2. Emulsification of liquids

Said emulsion, can be prepared by normal phase emulsification process, namely, oil in water (O/W) emulsification process; and also can be prepared by reverse phase emulsification process, namely, water in oil(W/O) emulsification process; and also can be prepared by triphasic emulsification process, such as oil solvent/ emulsifying agent/water emulsification process; and also can be prepared by quadriphasic emulsification process, such as oil solvent / emulsifying agent/coemulsifier/water emulsification process.

As to the emulsification system, the oil solvent thereof is usually a C₆-C₈ alkane or cycloalkane. Common emulsifying agent comprises ionic and non-ionic surfactant. The typical cationic surfactant comprises cetyltrimethylammonium bromide (CTAB), dodecyltrimethylammonium chloride (DTAC), dioctodecylammonium chloride (DODMAC), cetylpyridinium bromide (CPB), and the like. Anionic surfactant mainly comprises sodium dodecyl sulphate (SDS), sodium di-2-ethyl-1-hexyl sulfosuccinate (AOT), sodium dodecylbenzenesulfonate (SDBS), sodium dodecyl polyoxyethylene ether sulfate (AES), and the like. Non-ionic surfactant mainly comprises polyvinyl alcohol, dodecanoyl diethanolamine, polyoxythylene fatty alchol ethers and alkyl phenol polyoxythylene ethers etc., such as TX-6, AEO₅, AEO₇, AEO₉, AEO₁₂, Triton X-100 and Span series and Tween series, etc. The above mentioned surfactants can be used separately or in combination of two or more kinds. The common coemulsifier comprises n-butanol, n-pentanol, n-hexanol, n-heptanol, n-octanol, n-decanol, n-dodecanol, and other fatty alcohols.

Said emulsification process by the apparatus of the present invention can be widely used to produce milk, cream, ice-cream and other foods; or vanishing cream, cleansing facial milk and other cosmetics; emulsion paint, metal machining liquid, texile auxiliary, and emulsions in the field of heavy oil, diesel oil, gasoline and the like; also further to produce catalyst, adhesive, printing ink, coating, dye, pigment, ceramic dye, magnetic material, liquid crystal material, polymer, and other inorganic or organic compounds.

Further, analysis of emulsions from said emulsification process may be carried out by the following methods: OM, SEM, AFM, TEM. These analysis methods are commonly used to analyze uniformity and dispersity of emulsions, as well as the size of droplets or particles thereof.

Technical effect of said emulsification process in the apparatus of the present invention consists in the high uniformity and dispersity of emulsion particles, the particle size being less than 1µm, and the emulsion keeping stable for several weeks without seperation or color change.

### 3. Microemulsification application

Microemulsion preparation in the apparatus of the present invention is suitable not only for micro-dispersion system, but also for micro-reaction system. Formation process of said micro-dispersion system comprises: after two kinds of immiscible liquids or microemulsions are respectively injected in different amount into the apparatus for processing materials, under high speed shear forces and high speed centrifugal forces, mixture rapidly becomes countless slight droplets surrounded by emulsifying agent and uniformly dispersing among liquids to form microemulsion. These liquid droplets are not easily combined due to the high lipotropy property and surface tension on their surfaces. After solvents in the system are evaporated, nanometer solid particles in the droplets can uniformly disperse into aqueous phase and keep invariable without agglomeration or deposition.

Formation process of said microreaction system comprises: after one kind of liquid or microemulsion and another kind of liquid or microemulsion are separately injected into a high shear mixer, liquid materials, under high speed shear forces and high speed centrifugal forces, become countless tiny droplets. These droplets, resemble to "micro-reactor", can rapidly carry out chemical reaction (e.g. polymerisation, redox reaction, hydrolytic reaction, complexation reaction or the like) under certain conditions (e.g. lightening, temperature, etc.). Various nanometer materials can be produced by restricting the growth of the reaction products using the droplets of microemulsion as micro-reactors.

Said microemulsion preparation can be carried out by normal phase microemulsification process, namely O/W microemulsification process; and also can be prepared by reverse phase microemulsification process, namely W/O microemulsification process; and also can be prepared by triphasic microemulsification process, such as oil solvent / emulsifying agent/water microemulsification process; and also can be prepared by quadriphasic microemulsification process, such as oil solvent / emulsifying agent/coemulsifier/water microemulsification process.

As to the microemulsification system, it is characterized in that the oil solvent usually used is a C₆-C₈ alkane or cycloalkane and the conventional emulsifying agents comprise ionic and non-ionic surfactants. The typical cationic surfactant comprises cetyltrimethylammonium bromide (CTAB), dodecyltrimethylammonium chloride (DTAC), dioctodecylammonium chloride (DODMAC), cetylpyridinium bromide (CPB), and the like. Anionic surfactant mainly comprises sodium dodecyl sulphate (SDS), sodium di-2-ethyl-1-hexyl sulfosuccinate (AOT), sodium dodecylbenzenesulfonate (SDBS), sodium dodecyl polyoxyethylene ether sulfate (AES), and the like. Non-ionic surfactant mainly comprises polyvinyl alcohol, dodecanoyl diethanolamine, polyoxythylene fatty alchol ethers and alkyl phenol polyoxythylene ethers etc., such as TX-6, AEO₅, AEO₇, AEO₉, AEO₁₂, Triton X-100 and Span series and Tween series, etc. The above mentioned surfactants can be used separately or in combination of two or more kinds. The common coemulsifier comprises n-butanol, n-pentanol, n-hexanol, n-heptanol, n-octanol, n-decanol, n-dodecanol, and other fatty alcohols.

Said microemulsion preparation in the apparatus of the present invention can be widely used to produce various catalysts, organic silicon materials, adhesives, ink, coatings, dye, pigment, ceramic dye, semiconductor, superconductor, magnetic material, liquid crystal material, polymer, and other nanometer particles such as those of elmental metal, alloy, oxide, sulfide and other nanometer inorganic compound and nanometer organic polymer; and further can be used to self-assembled nanometer particles and produce nanometer powder crystal, nanometer non-crystal power. These nanometer powers have a narrow range of particle diameter and their particle diameter is vey small and can be easily controlled below 100nm.

Said microemulsion preparation can be widely used to produce various inorganic or organic nanometer materials.

Furthermore, analysis of microemulsions obtained from said microemulsification process in the apparatus of the present invention may be carried out by the following methods: optically microscopical image analysis (OM), scanning electron microscopical image analysis (SEM), atomic force microscopical image analysis (AFM), transmission electron microscopical image analysis (TEM) and X-ray diffraction analysis (XRD). These analysis methods are commonly used to analyze formation of microemulsion, and the uniformity and dispersity of the droples or particles, as well as the particle size.

Technical effect of said microemulsification process in the apparatus of the present invention consists in good transparency of microemulsion, high uniformity and dispersion of particles, particle size below 100 nm, and high solid content, high stabilization of the microemulsion without separation or color change for a long period.

### 4. Substance extraction application

Extraction of the present invention can be used not only to solvent extraction method, but also to complexation extraction method, and also to extraction with ionic liquids as extracting agent or extracting phase.

Said solvent extraction achieves extraction and separation based on the dissolving performance difference of extractants in the extracting phase. Conventional extracting phase mainly comprise organic solvents or water. Said solvent extraction and separation technique of the present invention can be widely used in inorganic chemistry, analytical chemistry, radiological chemistry, abstraction and recycle of nuclide, and other aspects.

Said complexation extraction means the following steps: contacting extractants with an extracting agent containing a complexing agent; reacting the complexing agent with the extractants to form a complex; transferring the complex to the extracting phase; with the solute being recycled during converse reaction, and the extracting agent being reused. Compared with said solvent extraction method, the complexation extraction method has two obvious advantages as follows.
(a) Said complexation extraction can provide very high distribution coefficient value under low solute concentration; therefore it can achieve a complete separation of polar organic substance under the condition of low concentration.
(b) Since solute separation depends on complex reaction, another outstanding peculiarity of said complexation extraction is its high selectivity.

Said complexation extraction of the present invention is capable of extracting and separating polar organic substances (e.g. organic carboxylic acid compounds, organic sulfonic acid compounds, organic amine compounds, organic sulfur compounds, and organic compounds with amphiprotic functional groups. The key point in these applications consists in selecting proper complexing agent, cosolvent, diluter and their composition for different system.

Said complexing agent shall meet at least one requirement listed below:
(a) The complexing agent shall have corresponding functional group, and the associated bonding energy thereof with the solute to be separated shall be at a required amount so as to easily form complex compound and achieve phase transfer;
(b) Association bond energy can not be too high, so that the complex compound easily fulfills converse reaction in the second step and the complexing agent easily regenerates;
(c) In the process of complexing reaction and solute separation, the amount of water extraction by complexing agent shall be as little as possible or water is easily wiped off from solvent with the help of complexing agent;
(d) In order to avoid irreversible loss, there shall be no other secondary reaction in the process of complexation extraction, and complexing agent shall be thermally stable and not easy to decompose and degrade.

Said cosolvent and diluter shall meet the following requirements:
(a) As good solvents for the complexing agent, they shall promote the formation of the complex compound and achievement of phase transfer;
(b) They can adjust viscosity, density and interfacial tension of mixed extracting agent so as to easily implement liquid to liquid extraction;
(c) Diluter added can decrease extracting amount of water.

Said extraction method with ionic liquids as extracting phase or extracting agent, compared with the extraction method with organic solvent, has unique advantages such as low volatility, non-flammability, thermal stability and reusability. These advantages ensure that it will not pollute the environment as is inevitable for organic solvents. Said extraction method with ionic liquids as extracting phase or extracting agent is suitable for extracting organic substances from crude oil and extracting organic substances or metallic ions from waste water. The key point in the application of extracting organic substances from crude oil or water by ionic liquid consists in selecting proper ionic liquid and its composition. The key point in the application of extracting metallic ions from water by ionic liquid consists in selecting proper extracting agent and its composition.

Said organic substances to be extracted mainly comprise aromatic hydrocarbon and their derivatives, organic carboxylic acid compounds, organic sulfonic acid compounds, organic sulfur compounds, and organic amine compounds present in oil or waste water. Involved metallic ions are mainly heavy metallic ions, such as Ni²⁺, Cu²⁺, Ag⁺, Au²⁺, Hg²⁺, Pt²⁺, Pb²⁺, Cr³⁺, Cd²⁺, Mn²⁺ and the like.

Said ionic liquids of the present invention should meet at least one of the following requirements: (a) in liquid state at normal temperature and stable in the air; (b) as slight solubility as possible in crude oil or water to decrease cross contaminants. The melting point, stability, solubility and extraction efficiency of the ionic liquids can be adjusted by selecting proper anions and cations, as well as by selecting different mixed ionic liquids.

Extractants analysis method of the present invention comprises one or more of OM, SEM, AFM, TEM, FTIR, NMR, CE. These analysis methods are commonly used to analyze uniformity, dispersion, droplet size and extraction efficiency and other properties of an extraction liquid.

Advantages of said materials extraction in the apparatus of the present invention comprise high uniformity and dispersion of the droplets, droplet size on the order of micrometers, and the natural separation of the extraction liquid after a period of time, good extraction efficiency.

### 5. Substance reaction application

Substance reaction application of the apparatus of the present invention involves gas phase reaction system, liquid phase reaction system or gas-liquid phase reaction system, particularly heterogeneous phase reaction system. Further, the reaction comprises liquid-liquid reaction, polymerisation, oxidization-desulfurization reaction and the like, but not limited to these reactions.

### 5.1 liquid-liquid reaction application

In said liquid-liquid reaction application, said liquid can be a pure liquid or a mixture of several liquids which can be mixed or prepared in advance; said gas-liquid phase reaction system is characterized in that at least one substance is gas which can be fed from pressure vessel through pressure controlling valve and discharged out of mixer through its outlet.

Said liquid-liquid reaction method involves hydrolytic reaction, double decomposition reaction, neutralization reaction, ion exchange reaction, redox reaction, complexation reaction, complex reaction , chelation reaction , halogenating reaction , nitration reaction, cyanation reaction, epoxidation reaction, diazo reaction, alkylation reaction, esterification, condensation reaction, Fridel-Craft reaction, polymerization, and the like; said gas-liquid reaction method means that gas can be rapidly dissolved in liquid, so that two or more substances of the gas and liquid can react at very high speed, sometimes even without catalyst and/or surfactant used in the conventional methods; therefore, economically feasible reaction speed is attained.

### 5.2 Polymerization application

Further, the apparatus of the present inventon is suitable for mixing active fluid for anion polymerization, wherein at least one active fluid comprises at least one (meth)acrylic acid monomer.

Said (meth)acrylic acid monomer preferably means acrylic anhydride, methacrylic anhydride, methyl, ethyl, propyl, n-butyl, tert-butyl, ethylhexyl, nonyl, 2-dimethyl amino ethyl acrylate.

Said polymerization can be performed outside the apparatus of the present invention, or start inside the mixer and continue outside the mixer.

One application of liquid-liquid reaction process or gas-liquid reaction process involved in the present invention is suitable for grafting reaction of alkene polymer and organic monomer containing initiator, wherein at least one organic monomer comprises at least one vinylated unsaturated heterocycle monomer containing nitrogen, sulphur or oxygen.

Said alkene polymer is particularly polyethylene, ethylene-propylene copolymer, styrene-butadiene rubber, polyisoprene, ethylene-propylene-diene ternary copolymer, polymethacrylate, polystyrene, butadiene-styrene copolymer and the like.

Said vinylated unsaturated heterocycle monomer containing nitrogen or oxygen, is particularly N-vinylimidazole, 1-vinyl-pyrrolidine, C-vinylimidazole, N-alkylimidazole, 1-vinylpyrrolidine, 2-vinylpyridine, 4-vinylpyridine, N-methyl-N-vinyl acetamide, diallylformamide, N-methyl-N-allyl formamide, N-ethyl-N-allyl formamide, N-cyclohexyl-N-allyl formamide, 4-methyl-5-ethylthiazole, N-allyl-2-isooctylbenzothiazine, 2-methyl-1-vinylimidazole, 3-methyl-1-vinylimidazole, N-vinylpurine, N-vinylpiperazine, N-vinylsuccinimide, vinylpyridine, vinylmorpholine, maleic acid, acrylic acid, maleic anhydride, etc.

Said initiator is preferably ditert-butyl peroxide, dicumyl peroxide, tert-butyl cumyl peroxide, tert-butyl peroxy benzoate, tert-amyl peroxy benzoate, tert-butyl peroxybenzoate, tert-butyl peroxy benzoate, benzoyl peroxide, tert-butyl monoperoxy phthalate, hydrogen peroxide, cumene hydroperoxide, tert-amyl peroxide, etc.

In said grafting polymerization process, mixing ratio, flow rate, mixing temperature and rotation speed and other experimental parameters can be adjusted through system software to achieve rapid reaction and best products properties.

Said grafting polymerization can be performed outside the mixer of the present invention, or start inside the mixer and continue outside the mixer.

### 5.3 Application of gas-liquid phase desulfurization reaction

Gas-liquid reaction involved in the present invention is suitable for a gas desulfurization technique, particularly for mixing reaction of acid gas and alkaline liquid, thereof, with at least one alkaline liquid containing at least one alcohol amine compound or hydroxid.

Said alcohol amine compounds are preferably monoethanolamine, diethanolamine, diisopropanolamine, N-methyl diethanolamine, N-ethyl diethanolamine, N-propyl diethanolamine, N-butyl diethanolamine and other alkaline solution. Said alcohol amine compounds can further be mixed with other co-desulfurization solvent (e.g. sulfolane) in different volume ratios to achieve better desulfurization efficiency.

Said hydroxide is preferably sodium hydroxide (NaOH), potassium hydroxide (KOH), calcium hydroxide (CaOH), ammonium hydroxide and other alkaline solutions.

Said acid gas is preferably natural gas, refinery gas, tail gas, syngas and the like containing impurities such as hydrogen sulfide, organic sulphur (thiols), carbon dioxide.

In said gas desulfurization reaction process, mixing ratio, flow rate, mixing temperature and rotation speed and other experimental parameters can be adjusted by system software to achieve rapid desulfurization reaction and optimum desulfurization efficiency.

Said gas desulfurization reaction can be performed outside the mixer of the present invention, or starts inside the mixer and continues outside the mixer.

Said gas desulfurization technique of the present invention is also suitable for any gas and liquid reaction.

Further, the application of liquid-liquid reaction of the present invention is suitable for gas desulfurization technique, particularly for mixing reaction of acid gas and alkaline liquid, wherein at least one alkaline liquid contains at least one alcohol amine compound or hydroxide.

### 5.4 Application of liquid phase desulfurization

Further, said liquid phase desulfurization is suitable for redox reaction of active fluids containing an oxidant in acidic medium, wherein at least one active fluid contains at least one sulphur-containing compound.

Said sulphur-containing is particularly dialkyl substituted sulfides, dialkyl substituted thiophene and its derivatives , alkyl substituted benzothiophene and its derivatives , and alkyl substituted dibenzothiophene and its derivatives. Said alkyl comprises methyl, ethyl, propyl, n-butyl, tert-butyl, ethylhexyl, nonyl, and the like.

Said oxidant comprises peroxides and other oxides, particularly H₂O₂, O₃, N₂O, ClO₂, ClO⁻, (CH₃) ₂CO₂, t-BuOOH, C₅H₁₁NO₂, ClO₃⁻, HSO₃⁻, IO₄⁻, and the like.

Said acid medium comprises inorganic acids and organic acids, particularly hydrochloric acid, hydrobromic acid, hydroiodic acid, sulphuric acid, nitric acid, phosphoric acid, boracic acid, carbonic acid, methanoic acid, acetic acid, trifluoroacetic acid, and the like.

Said oxidation-desulfurization reaction can be performed outside the mixer of the present invention, or starts inside the mixer and continues outside the mixer.

Said substance reaction in the apparatus of the present invention is not limited to the above-mentioned, and it can also involve various organic chemical reactions, such as hydrogenation reaction, hydroformylation reactions, carbonylation reactions, dimerization and oligomerization of olefins, Diels-Alder reactions, acylation reactions, Heck reactions, Suzuki reactions, Stille coupling reaction, Trost-Tsuji coupling reaction, allylation reaction, nucleophilic displacement reaction, Baylis-Hillman reaction, Wittig reaction, free radicals cycloaddition reactions, asymmetric ring opening reaction of epoxides, continuous multistep reactions, and enzyme catalyzed organic reaction and asymmetric synthesis reaction, and the like. Reactants of said respective reaction can react rapidly, even sometimes without catalyst needed in the traditional reactions.

The above-mentioned oxidation-desulfurization reaction can be performed within the the apparatus of the present invention, and also can be performed within the containing chamber with two smooth surfaces.

Another aspect of the present invention relates to a method for desulfurizing sulfur-containing material, comprising the steps of providing a desulfurizer(s) and sulphur-containing material; providing a containing chamber, which is formed by a first element and a second element arranged within the first element wherein the second element can rotate relatively to the first element under the action of external force; feeding the desulfurizer and sulphur-containing material into the containing chamber to be processed.

In another embodiment, the surface of the first or second element toward said containing chamber, can be smooth, and also can be non-smooth.

In another embodiment, the surface of the first or second element toward said containing chamber can be arranged with a disturbing part, and also can be without a disturbing part.

Said sulphur-containing material comprises sulfur-containing gas and/or sulfur-containing liquid. Sulfur-containing gas comprises natural gas and liquid comprises sulfur-containing crude oil. Desulfurizer can be any kind of desulfurizers in the art.

In another embodiment, the thickness of said containing chamber is on the order of micrometers.

### 6. Application in materials preparation

Application in ionic liquids preparation

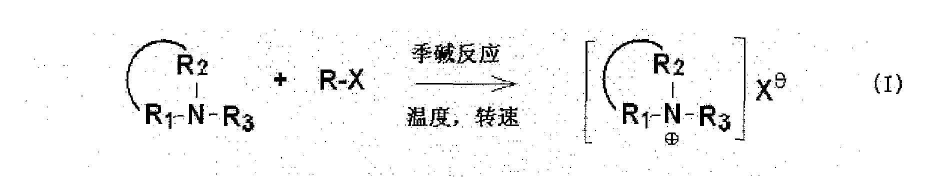

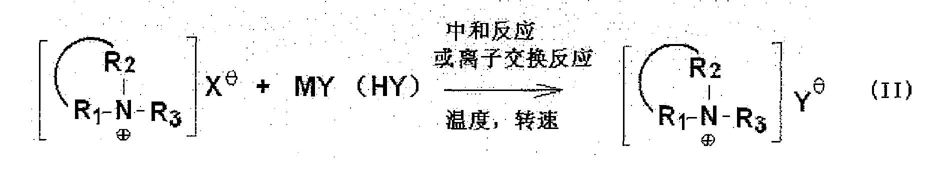

In one embodiment for ionic liquids preparation, general reaction formula is as follows: 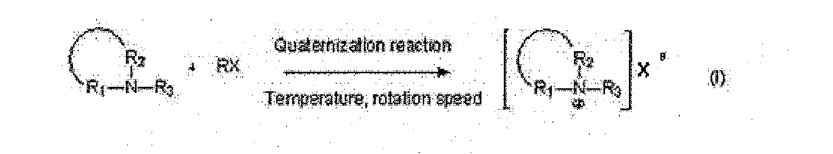 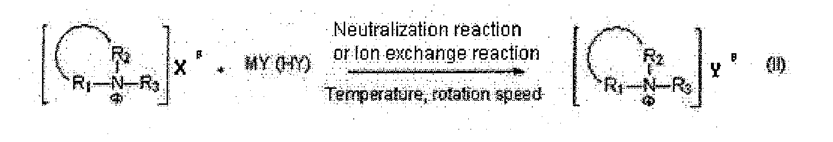 wherein,
R denotes methyl (CH₃) , ethyl (C₂H₅), propyl (C₃H₇), butyl (C₄H₉) or other linear or branched alkyls with 1-20 carbons, and also can denote methoxy group, ethoxy group, propoxy group, butoxy group or other linear or branched alkoxy with 1-20 carbons;
R₁, R₂ each denotes methyl(CH₃), ethyl(C₂H₅), propyl(C₃H₇), butyl(C₄H₉) or other linear or branched alkyls with 1-20 carbons;
R₃ denotes H (hydrogen), methyl (CH₃), ethyl (C₂H₅), propyl (C₃H₇), butyl (C₄H₉) or other linear or branched alkyls with 1-20 carbons;
X denotes chlorine atom (Cl), bromine atom (Br), iodine atom (I) or the like;
Y denotes PF₆⁻, BF₄⁻, CH₃SO₃⁻, CH₃CO₃⁻, N (SO₂CF₃) ₂⁻ or the like;
M denotes sodium (Na), potassium (K), silver (Ag), ammonium ion (NH₄⁺) or the like;
H denotes hydrogen atom;
N denotes nitrogen atom.

In the general formulae (I) and (II),

When R₃ is H, R₁ and R₂ can substitute separately or together form into various rings. The possible structures are as follows:

Five-membered heterocycles and benzoheterocycles thereof 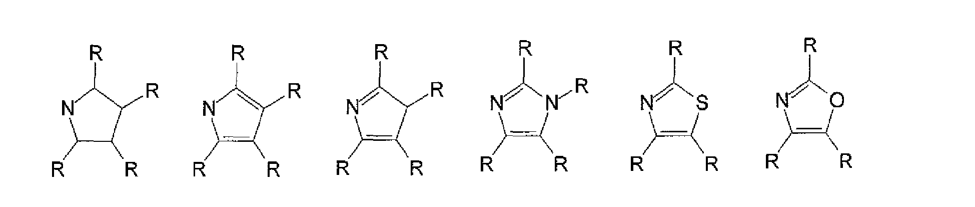 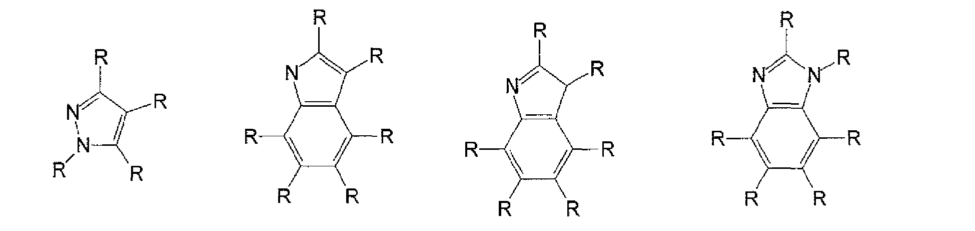 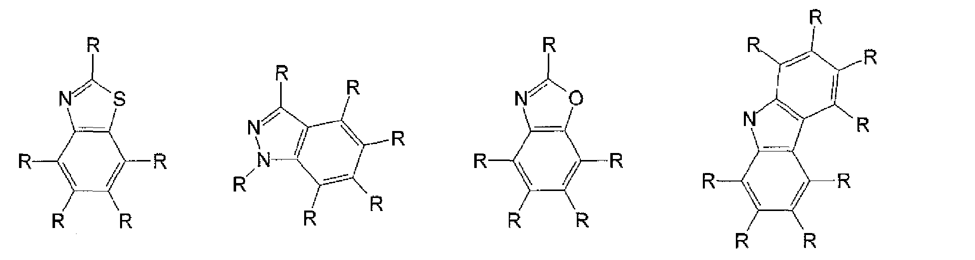 wherein, R denotes H (hydrogen), methyl (CH₃), ethyl (C₂H₅) or other linear or branched alkyls with 1-10 carbons. R can be same or different, and the adjacent R groups can substitute separately or together form into ring.

Six-membered heterocycles and benzoheterocycles thereof 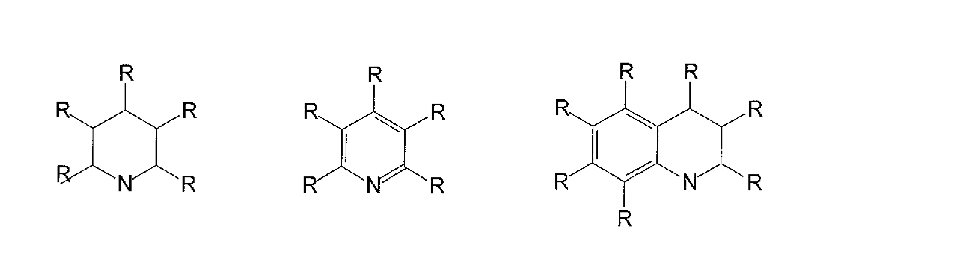 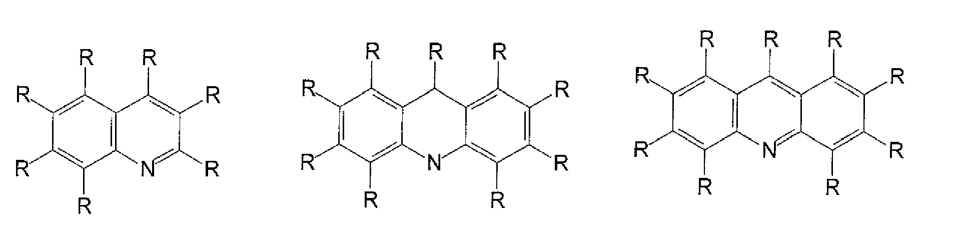 wherein, R denotes H (hydrogen), methyl (CH₃), ethyl (C₂H₅) or other linear or branched alkyls with 1-10 carbons. R can be same or different, and the adjacent R groups can substitute separately or together form into ring.

For general formulae (I) and (II), the temperature is in the range from room temperature (RT) to the maximum temperature (Tmax) of the mixer which is commonly about 150 °C; rotation speed is in the range from zero to the maximum rotation speed (Vmax) of the mixer which is commonly about 10000 round per minute (RPM).

The above-mentioned ionic liquid preparation can be performed within the apparatus of the present invention, and also can do within the containing chamber with both smooth surfaces.

Another aspect of the present invention relates to a method for processing ionic liquid, comprising the following steps: providing at least two kinds of ionic liquids; providing a containing chamber, which is formed by a first element and a second element arranged within the first element wherein the second element can rotate relatively to the first element under the action of external force; feeding said ionic liquids into said containing chamber to be processed.

In another embodiment, the surface of the first or second element toward said containing chamber can be smooth, and also can be non-smooth.

In another embodiment, the surface of the first or second element toward said containing chamber can be arranged with a disturbing part, and also can be without a disturbing part.

In another embodiment, the thickness of said containing chamber is on the order of micrometers.

Further, said apparatus of the present invention can also be used in any chemical reaction or green chemical reaction with ionic liquids as solvent or catalyst. Said methods of the present invention can also be widely used to prepare inorganic substance, organic substance, medicament, catalyst, macromolecular polymer and the like.

Said chemical reaction or green chemical reaction system mainly involves hydrogenation reaction, hydroformylation reaction, carbonylation reaction, dimerization and oligomerization of olefins, Diels-Alder reaction, Friedel-Crafts reaction, acylation reaction, selective alkylation reaction, Heck reaction, Suzuki reaction, Stille coupling reaction, Trost-Tsuji coupling reaction, allylation reaction, oxidation reaction, nucleophilic displacement reaction, Baylis-Hillman reaction, Wittig reaction, Free radicals cycloaddition reaction, asymmetric ring opening reaction of epoxides, continuous multistep reaction, and enzyme catalyzed organic reaction and asymmetric synthesis reaction, and the like.

Further, said apparatus of the present invention can also be used in pharmacy industry, particularly to produce injectable medicaments for external use or internal use.

The application in materials preparation by said apparatus of the present invention is suitable for homogeneous liquid reaction system, heterogeneous gas-liquid reaction system, and heterogeneous liquid-liquid reaction system.

In addition, in order to apply said apparatus of the present invention in a better way, said apparatus can be connected with computer software system which is used to control the operation of the whole apparatus. Accordingly, rapid, accurate, automatic, continuous and batched sample preparation can be achieved. The connecting means can be any means in the art.

Further, the materials processing in the above-mentioned apparatus with computer software system comprises the following steps:
(a) preparing raw materials;
(b) feeding said raw materials into the containing chamber respectively through inlets 30,31;
(c) designing the experimental procedure which involves mixing of raw materials, product collecting, cleaning and drying of the reaction system;
(d) setting experimental parameters which involve mixing ratio of raw materials, flow rate of the raw materials at the two inlets, reactor temperature, shaft bearing temperature, rotation speed and collecting amount;
(e) repeating steps (c) and (d) and changing experimental parameters as required, if it is desired to prepare mixing components in different conditions;
(f) running the procedure, wherein after system self-examination is successfully fulfilled, the experimental procedure will run automatically and sequentially, and different mixing components will be collected;
(g) ending the experimental procedure;
(h) sample processing and analyzing;
(i) ending the whole experiment.

Liquid raw material involved in the above-mentioned experimental steps can be a single substance; and also can be a mixture of two or more kinds of substances. Said mixture can be automatically prepared by an automatic liquid distributor; and also can be prepared by a multi-channel liquid feeding system arranged in front of the inlets of said apparatus.

The above-mentioned experimental procedure is programmed in system software. The order of the involved steps of the procedure can be adjusted if needed, for example it can orderly be mixing, collecting, cleaning and drying; or be cleaning, drying, mixing, collecting, cleaning and drying. Method for drying is blow-drying with an inert gas. The parameters can be selected or adjusted according to the following: the amount of the raw materials fed through the two inlets can be 1ml, 5ml, 10ml, 20ml, 25ml, 50ml, or the like; the type of mixing ratio can be mol ratio, volume ratio, mass ratio; rotation speed can be from zero to 12000 rounds per minute (RPM); flow rate can be from zero to 10 ml/min; the temperature of the feeding means can be from room temperature to 100 °C; the reactor temperature can be from room temperature to 250 °C; the shaft bearing temperature can be from room temperature to 80 °C.

Cleaning solvent involved in said experimental procedure is selected according to the solubility of raw materials to be mixed and products, and it can be a single cleaning solvent, and also can be a mixture of cleaning solvents. The cleanness can be fulfilled through many steps with many different cleaning solvents for many times. The common cleaning solvents comprise n-hexane, methylene dichloride, chloroform, carbon tetrachloride, benzene, toluene, tetrahydrofuran, acetone, ethyl acetate, acetonitrile, methanol, ethanol, water and the like.

Said sample processing methods involved in said experimental procedure comprise solvent extraction, centrifugal separation, filtration, vacuum drying, column chromatography separation. Common solvents used in said solvent extraction are solvents that are insoluble in products but soluble in raw materials, especially with low boiling point and good volatility. Common organic solvents are n-hexane, methylene dichloride, chloroform, carbon tetrachloride, benzene, toluene, tetrahydrofuran, acetone, ethyl acetate, acetonitrile, methanol, and ethanol. Said column chromatography separation is used for crude separation of products, commonly comprising adsorption chromatography separation, gel permeation chromatography separation, ion exchange chromatography seperation, in which the common stuffing is consisted of silica gel, alumina, silicon alkylation series gels, cellulose , polyamide, or the like.

Said sample analysis method involved in said experimental procedure mainly comprises Capillary Electrophoresis (CE), Gas Chromatography (GC), Liquid Chromatography (LC), Inductive Coupled Plasma Emission Spectrometer (ICP) , Mass Spectrometry(MS or QMS), Fourier Transform Infrared Spectroscopic(FTIR) analysis, Nuclear Magnetic Resonance (NMR), X-ray Diffractive (XRD) analysis, Optical Microscopical image analysis(OM), Scanning Electron Microscopical image analysis ( SEM ), Atom Force Microscopical image analysis ( AFM ), Transmission Electron Microscopical image analysis ( TEM ) . CE, GC and LC are suitable for separation analysis, qualitative analysis and quantitative analysis of mixing products; ICP is suitable for qualitative analysis and quantitative analysis of metallic elements in mixing products; MS, FTIR and NMR are suitable for molecular weight, structure and functional group analysis of mixing products; OM, SEM, AFM, TEM and XRD are suitable for shape and configuration inspection, such as color, particle size and uniformity. Analysis methods involved in the present invention can be used separately or in combination such as the combination of CE( or HPLC, GC ) with MS, the combination of CE ( or HPLC, GC ) with FTIR. The combination of several analysis methods is good for rapid and accurate analysis of mixing products.

Compared with the existing techniques, advantages of said materials processing system of the present invention comprise:
1. Continuousness: sample preparation by the combination of flow injection method and high speed shear mixing method, not only achieves the continuousness without being interrupted in the whole preparation process (from raw materials in to products out), but also is good for continuous and batched industrial production, which is obviously different from the traditional "one-pot reaction" fixed mode.
2. Rapidness: due to the use of the high speed shear mixer, reactants can be rapidly and efficiently mixed at the beginning to make the mixing in thoroughly uniformity or the reaction tends to completeness. Further, because the whole process proceeds under a continuous flow condition, mixing time or reaction time is greatly shortened. In general, the whole process can be fulfilled within several minutes or about ten minutes, which is quicker than stirring mixing in the prior art.
3. Automatization: flow injection method is one form of automatization. It is connected with high speed shear mixing and then is used for sample preparation, which makes the whole preparation process comprise reaction time and speed can be controlled by a uniform system software. In this way, it is easy to control and operate and the preparation process is visual. Furthermore, efficiency has been improved and it is easy for industrialization.
4. Accuracy: all sampling and reaction condition are controlled by software, which is good not only for improving reproducibility of the experimental results, but also for the accuracy of the experimental results.

### BRIEF DESCRIPTION OF THE DRAWINGS

Fig. 1 is a schematic representation of an apparatus for processing materials in the prior art.
Fig. 2 is a schematic representation of structure in accordance with the apparatus of the invention.
Fig. 3 is a schematic representation of partial structure in accordance with the apparatus of the invention.
Fig. 4 is a schematic representation of structure of the second element in accordance with the apparatus of the invention.
Fig. 5 is a schematic representation of the sectional view of the working part in accordance with another embodiment of the invention.
Fig. 6 is a schematic representation of the sectional view of the working part in accordance with another embodiment of the invention.
Fig. 7 is a schematic representation of the sectional view of the working part in accordance with another embodiment of the invention.

### DETAILED DESCRIPTION OF THE INVENTION

Compared with said application of materials processing system of the present invention, said application of materials processing apparatus of the present invention is easier. Therefore, below we will only give detailed description for the application of materials processing system of the present invention. Further, feeding mode is exemplarily arranged as raw materials being injected through the inlets with two feeding devices.
1. Application for mixing honey and acrylics
   (1) Honey and acrylics are respectively fed into dry feeding devices A and B.
   (2) Set the experimental procedure which involves mixing, collecting, cleaning and drying. Cleaning solvents are acetone and water. Method for drying is blow-drying with nitrogen gas. Capacity of the collecting bottle is 5ml. Experimental procedure is set as divided into two parts.
   (3) The parameters for the first part of the experimental procedure are set as follows: temperature for the feeding device is 80°C, reactor temperature is 80°C, shaft bearing temperature is 50°C, rotation speed is 8000 RPM, volume ratio of honey to acrylics is 1:1, total flow rate is 0.5ml/min, collecting volume is 2 ml, volume ratio of acetone to water is 1:1 and total flow rate is 0.5ml/min, cleaning lasts for 5 minutes. The parameters for the second part of the experimental procedure are same with those of the first part, except rotation speed is 10000 RPM and total flow rate is 0.2ml/min.
   (4) Run the experimental procedure, and after successful system self-examination, mixing starts without any interruption during the mixing.
   (5) Collect outflows of the mixture respectively.
   (6) Preparation is completed.
   (7) Have a small amount of the collected mixture placed between two pieces of glass slide, press the glass slides to have the mixture spread out as possible, and observe the mixing performance of the mixture through optical microscope.
2. Application for emulsification of polymer PMMA
   (1) Prepare solution. A PMMA solution in Chloroform is prepared by adding 5g of PMMA into 100g of chloroform solvent to dissolve thoroughly; A SDS solution in Water is prepared by adding 0.5g of surfactant into 100g of water to dissolve thoroughly.
   (2) Respectively feed 25ml of PMMA solution in chloroform and SDS solution in water into the feeding devices A and B.
   (3) Set experimental procedure, sequentially comprising mixing, collecting, cleaning and drying. Cleaning solvents are chloroform and water. Method for drying is blow-drying with nitrogen gas. Capacity of collecting tube is 5ml. Experimental procedure is set as divided into five parts.
   (4) The parameters for the first part of the experimental procedure are set as follows: feeding device temperature is at 25°C, reactor temperature is at 25°C, shaft bearing temperature is at 50°C, rotation speed is at 8000 RPM, volume ratio of PMMA solution in chloroform to SDS solution in water is 1:9, total flow rate is 1ml/min, collecting volume is 2 ml, volume ratio of chloroform to water is 1:1 and total flow rate is 0.5ml/min, cleaning and drying respectively last for 5 minutes. The parameters for the second part of the experimental procedure are the same with those of the first part, except volume ratio of PMMA solution in chloroform to SDS solution in water is 1:4, total flow rate is 0.5ml/min; The parameters for the third part of the experimental procedure are the same with those of the first part, except volume ratio of PMMA solution in chloroform to SDS solution in water is 1:4; The parameters for the fourth part of the experimental procedure are the same with those of the first part, except total flow rate is 0.5ml/min; The parameters for the fifth part of the experimental procedure are the same with those of the first part, except volume ratio of PMMA solution in chloroform to SDS solution in water is 1:15, total flow rate is 0.8ml/min.
   (5) Run the experimental procedure, and after successful system self-examination, mixing starts without any interruption during the mixing.
   (6) Collect outflows of the mixture respectively, and the collected mixtures are marked with different numbers 051013-4, 051013-5, 051013-6, 051013-7 and 051013-8.
   (7) Preparation is completed.
   (8) Have a small amount of the collected mixture placed between two pieces of glass slides, press the glass slides to have the mixture spread out as possible, and observe the mixing performance of said mixture through optical microscope.
3. Application for emulsification of polymer PC
   (1) Prepare solution. PC solution in chloroform is prepared by adding 5g of PC into 100g of chloroform solvent to dissolve thoroughly; SDS solution in water is prepared by adding 0.5g of surfactant into 100g of water to dissolve thoroughly.
   (2) Separately feed 25ml of PC solution in chloroform and SDS solution in water into the dry feeding devices A and B.
   (3) Set experimental procedure, sequentially comprising mixing, collecting, cleaning and drying. Cleaning solvents are chloroform and water. Method for drying is blow-drying with nitrogen gas. Capacity of collecting tube is 5ml. Experimental procedure is set as divided into there parts.
   (4) The parameters for the first part of the experimental procedure are set as follows: feeding device temperature is at 25°C, reactor temperature is at 25°C, shaft bearing temperature is at 50°C, rotation speed is at 8000 RPM, volume ratio of PC solution in chloroform to SDS solution in water is 1:9, total flow rate is 1ml/min, collecting volume is 2 ml, volume ratio of chloroform to water is 1:1 and total flow rate is 0.5ml/min, cleaning and drying respectively last for 5 minutes. The parameters for the second part of the experimental procedure are the same with those of the first part, except volume ratio of PC solution in chloroform to SDS solution in water is 1:4, total flow rate is 0.5ml/min; The parameters for the third part of the experimental procedure are the same with those of the first part, except volume ratio of PC solution in chloroform to SDS solution in water is 1:4.
   (5) Run the experimental procedure, and after successful system self-examination, mixing starts without any interruption during the mixing.
   (6) Collect outflows of the mixture respectively, and the collected mixtures are marked with different numbers 051013-1 , 051013-2 and 051013-3.
   (7) Preparation is completed.
   (8) Have a small amount of the collected mixture placed between two pieces of glass slides, press the glass slides to have the mixture spread out as possible, and observe the mixing performance of the mixture through optical microscope.
4. Oxidation-desulphurization experiment of dibenzothiophene and H₂O₂ und acidic condition
   (1) Prepare solution. Concentration of heptane solution of dibenzothiophene (DBT) is 2500ppm; acid solution of H₂O₂ is prepared by mixing 30% N₂O₂ with glacial acetic acid in a volume ratio of 1:1.
   (2) Separately feed 25ml of heptane solution of DBT and acid solution of H₂O₂ into the dry feeding devices A and B.
   (3) Set experimental procedure, sequentially comprising mixing, collecting, cleaning and drying. Cleaning solvent are heptane and water. Method for drying is blow-drying with nitrogen gas. Capacity of collecting tube is 5ml. Experimental procedure is set as divided into four parts.
   (4) The parameters for the first part of the experimental procedure are set as follows: feeding device temperature is at 25°C, reactor temperature is at 70°C, shaft bearing temperature is at 50°C, rotation speed is at 8000 RPM, volume ratio of heptane solution of DBT to acid solution of H₂O₂ is 10:1, total flow rate is 1ml/min, collecting volume is 2 ml, volume ratio of heptane to water is 1:1 and total flow rate is 0.5ml/min, cleaning and drying respectively last for 5 minutes. The parameters for the second part of the experimental procedure are the same with those of the first part, except volume ratio of heptane solution of DBT to acid solution of H₂O₂ is 5: 1; The parameters for the third part of the experimental procedure are the same with those of the first part, except reactor temperature is at 95°C; The parameters for the fourth part of the experimental procedure are the same with those of the first part, except reactor temperature is at 95°C and volume ratio of heptane solution of DBT to acid solution of H₂O₂ is 5:1.
   (5) Run the experimental procedure, and after successful system self-examination, mixing starts without any interruption during the mixing.
   (6) Collect outflows of the mixture respectively.
   (7) Preparation is completed.
5. Extraction application
   (1) An ionic liquid of 3- butyl-1- methyl imidazolium hexafluorophosphate and a kind of crude oil are fed respectively into the dry feeding devices A and B.
   (2) Set experimental procedure, sequentially comprising mixing, collecting, cleaning and drying. Cleaning solvent is n-hexane. Method for drying is blow-drying with nitrogen gas. Capacity of collecting tube is 5ml. Experimental procedure is set as divided into three parts.
   (3) The parameters for the first part of the experimental procedure are set as follows: feeding device temperature is at 25°C, reactor temperature is at 25°C, shaft bearing temperature is at 50°C, rotation speed is at 8000 RPM, volume ratio of ionic liquid to crude oil is 1:10, total flow rate is 1.0 ml/min, collecting volume is 2 ml, total flow rate of n-hexane solvent is 0.5ml/min, cleaning lasts for 5 minutes. The parameters for the second part of the experimental procedure are the same with those of the first part, except volume ratio of ionic liquid to crude oil is 1:1; the parameters for the third part of the experimental procedure are the same with those of the first part, except volume ratio of ionic liquid to crude oil is 10:1.
   (4) Run the experimental procedure, and after successful system self-examination, mixing starts without any interruption during the mixing.
   (5) Collect outflows of the mixture respectively.
   (6) Preparation is completed.
   (7) Have a small amount of the collected mixture placed between two pieces of glass slides, press the glass slides to have the mixture spread out as possible, and observe the mixing performance of the mixture through optical microscope.
6. Synthesis application of ethylene-propylene rubber and 2-vinylpyridine grafting copolymer

### Raw materials:

Ethylene-propylene rubber, type: J-0050 , from Jilin Petrifaction Company
2-vinylpyridine, from Aldrich
t-butyl peroxybenzoate
1,2-dichlorobenzene, from Shanghai experimental reagent Co,. Ltd., batch No.: 20051016.

### Synthetic method:

a) Feed 90g of 1,2-dichlorobenzene into 250ml flask and heat the mixture to 80 °C, and then add 10g of ethylene-propylene rubber and stir for 30 minutes, and thus 10 % ethylene-propylene rubber solution is prepared.
b) Add 95g of 1,2-dichlorobenzene and 5g of 2-vinylpyridine into 250ml flask to form 5% monomer solution for cold storage at -20 °C.
c) Add 99.5g of 1,2-dichlorobenzene and 0.5g of t-butyl peroxybenzoate into 250ml flask to form 0.5% initiator solution for cold storage at -20 °C.
d) Have 25ml of 10% ethylene-propylene rubber solution injected into the feeding device 1 of high speed mixer, and have 5 ml of 5% monomer solution and 5 ml of 0.5% initiator solution injected into the feeding device of high speed mixer.
e) Set reactor parameters
   i. Ratio of the flow rate 2 to the flow rate 1 is 0.4.
   ii. Total flow is 7ml.
   iii. Temperature is at 140 °C.
   iv. Rotation speed is at 2000 RPM.
f) Run the experimental procedure and collect products.

### Sample purification method:

Dissolve the product from step f) into n-heptane and filter the mixture, add the filtrate by dripping into 200 ml acetone, and stir mixture when deposition appears. Next, after washing the product with acetone for three times, dry the product in vacuo at the temperature of 60 °C for 12 hours and at the temperature of 150 °C for 0.5 hours.

### Measuring method for grafting ratio:

Have 80.9 mg of the purified product added into 20 ml n-heptane and shake the mixture to complete dissolution. Determine the nitrogen content of the solution with ANTEK 9000 sulfur and nitrogen analysis device.

### Experimental results:

Nitrogen content of the sample is 10.6 ppm (gamma per milliliter),

Calculation of the grafting ratio: nitrogen content/ concentration of the testing sample/ nitrogen percentage in pyridine.

Grafting ratio of product is 0.49 wt%.
7. Preparation of the ionic liquid of 3- butyl-1- methyl imidazolium bromide
   (1) Dry 1-methylimidazole and 1-bromobutane, and feed them respectively into the dry feeding devices A and B.
   (2) Adjust reactor temperature to 105°C, shaft bearing temperature to 50°C, rotation speed to 10000 RPM.
   (3) Set flow rates of the feeding devices A and B respectively to 1 ml/min and run for 1 minute to make the front pipe of the mixer be filled with the raw materials.
   (4) Reset flow rate of the feeding device A to 0.37 ml/min, flow rate of the feeding device B to 0.6 ml/min, and mixing starts without any interruption during the mixing.
   (5) Collect crude product.
   (6) Preparation is completed, cleaning the reaction system with water and acetone separately.
   (7) Dump out un-reacted phase in the upper layer of the sample, add ethyl acetate to clean the lower layer of liquid, and remove the unreacted raw material. Repeat for three times till color of the product becomes milky white or straw yellow.
   (8) Dry the cleaned sample in vacuo at the temperature of 120 °C for 5 hours. Yield is 89%.
8. Preparation of the ionic liquid of 3- butyl-1- methyl imidazolium chloride
   (1) Dry 1-methylimidazole and 1-chlorobutane, and feed them respectively into the dry feeding devices A and B.
   (2) Adjust reactor temperature to 120°C, shaft bearing temperature to 50°C, rotation speed to 8000 RPM.
   (3) Same as 7 ( 3 ) .
   (4) Reset flow rate of the feedidng device A to 0.36 ml/min, flow rate of the feeding device B to 0.6 ml/min, and mixing starts without any interruption during the mixing.
   (5)- (7) Same as 7(5) - (7).
   (8) Dry the cleaned sample in vacuo at 100 °C for 5 hours. Yield is 75%.
9. Preparation of the ionic liquid of 3- decanyl-1- methyl imidazolium bromide
   (1) Dry 1-methylimidazole and 1-bromodecane, and feed them respectively into the dry feeding devices A and B.
   (2) Adjust reactor temperature to 115°C, shaft bearing temperature to 50°C, rotation speed to 5000 RPM.
   (3) Same as 7(3).
   (4) Reset flow rate of the feeding device A to 0.23 ml/min, flow rate of the feeding device B to 0.6 ml/min, and mixing starts without any interruption during the mixing.
   (5)- (7) Same as 7(5) - (7).
   (8) Dry the cleaned sample in vacuo at 80 °C for 10 hours. Yield is 80%.
10. Preparation of the ionic liquid of 3- butyl-1- methyl imidazolium iodide
   (1) Dry 1-methylimidazole and 1-iodobutane, and feed them respectively into the dry feeding devices A and B.
   (2) Adjust reactor temperature to 150°C, shaft bearing temperature to 50°C, rotation speed to 8000 RPM.
   (3) Same as 7(3).
   (4) Reset flow rate of the feeding device A to 0.33 ml/min, flow rate of the feeding device B to 0.5 ml/min, and mixing starts without any interruption during the mixing.
   (5)- (7) Same as 7(5) - (7).
   (8) Dry the cleaned sample in vacuo at 120 °C for 10 hours. Yield is 90%.
11. Preparation of the ionic liquid of 3- butyl-1- methyl imidazolium hexafluorophosphate
   (1) Feed methyl imidazolium bromide and potassium hexafluorophosphate solution in water at certain concentrations respectively into the dry feeding devices AandB.
   (2) Adjust reactor temperature to 80°C, shaft bearing temperature to 50°C, rotation speed to 8000 RPM.
   (3) Same as 7(3).
   (4) Reset flow rate of the feeding device A to 0.5 ml/min, flow rate of the feeding device B to 0.6 ml/min, and mixing starts without any interruption during the mixing.
   (5) - (6) Same as 7(5) - (6).
   (7) Dump out the water in upper layer of the sample, add large amount of water to clean the lower layer liquid, and remove the excessive KPF6. Repeat this step for three times.
   (8) Dry the cleaned sample in vacuo at 80 °C for 10 hours. Yield is 56%.
12. Preparation of nanometer particles of 9, 9-diethylhexylpolyfluorene
   (1) Prepare and formulate raw materials. Chloroform solution of 9,9-diethylhexylpolyfluorene ( PF ) with a concentration of 3.0wt%; aqueous solution of SDS with a concentration of 0.3%.
   (2) Respectively feed 25ml of chloroform solution of PF and aqueous solution of SDS into the dry feeding devices A and B.
   (3) Set experimental procedure, sequentially comprising mixing, collecting, cleaning and drying. Cleaning solvent are chloroform and water. Method for drying is blow-drying with nitrogen gas. Capacity of collecting tube is 5ml. Experimental procedure is set as divided into three parts.
   (4) The parameters for the first part of the experimental procedure are set as follows: feeding device temperature is at 25°C, reactor temperature is at 25°C, shaft bearing temperature is at 50°C, rotation speed is at 8000 RPM, volume ratio of chloroform solution of PF to aqueous solution of SDS is 1:5, total flow rate is 1ml/min, collecting volume is 2 ml, volume ratio of chloroform to water is 1:1 and total flow rate is 0.5ml/min, cleaning and drying respectively last 5 minutes. The parameters for the second part of the experimental procedure are the same with those of the first part, except volume ratio of chloroform solution of PF to aqueous solution of SDS is 1:1, total flow rate is 0.5 ml/min; The parameters for the third part of the experimental procedure are the same with those of the first part, except volume ratio of chloroform solution of PF to aqueous solution of SDS is 1:3.
   (5) Run the experimental procedure, and after successful system self-examination, mixing starts without any interruption during the mixing.
   (6) Collect outflows of the mixture separately.
   (7) Preparation is completed.

Particle size of the nano-polymer prepared there form is less than 100nm and polymer content is above 5%.
13. Microemulsification-polymerization preparation of poly (butyl acrylate)
   (1) Prepare and formulate raw materials. A microemulsion of butyl acrylate is prepared by the following steps: mixing butyl acrylate (monomer), hexadecane(costabilizer), and organic solvent at a certain ratio, adding in droplets resin solution soluble in alkali ( Morez 101 , 5wt% , pH=8.3 ) at the same time of ultrasound, till the mixture suddenly become transparent or semitransparent showing the formation of the microemulsion; 3wt% azo initiator VA-086 solution.
   (2) Respectively feed 25ml of microemulsion and initiator solution into the feeding devices A and B.
   (3) Set experimental procedure, sequentially comprising mixing, collecting, cleaning and drying. Cleaning solvents are chloroform and water. Method for drying is blow-drying with nitrogen gas. Capacity of collecting tube is 5ml. Experimental procedure is set as divided into three parts.
   (4) The parameters for the first part of the experimental procedure are set as follows: feeding device temperature is at 25°C, reactor temperature is at 25°C, shaft bearing temperature is at 50°C, rotation speed is at 6000 RPM, volume ratio of microemulsion to initiator is 10:1, total flow rate is 1ml/min, collecting volume is 2 ml, volume ratio of chloroform to water is 1:1 and total flow rate is 0.5ml/min, cleaning and drying respectively last for 5 minutes. The parameters for the second part of the experimental procedure are the same with those of the first part, except volume ratio of microemulsion to initiator is 20:1, total flow rate is 0.5ml/min; the parameters for the third part of the experimental procedure are same with those of the first part, except volume ratio of microemulsion to initiator is 5:1.
   (5) Run the experimental procedure, and after successful system self-examination, mixing starts without any interruption during the mixing.
   (6) Collect outflows of the mixture separately.
   (7) Preparation is completed.

Particle size of the nano-polymer prepared therefrom is more than 300nm and polymer content is above 50%.
14. Gas desulfurization reaction of sulfinol method
   (1) Prepare and formulate raw materials. Raw Material 1: an aqueous solution of cyclobutyl sulfone and methyldiethanolamine was used as desulfurizer, with the main compositon of methyldiethanolamine, cyclobutyl sulfone and water in a mass ratio of 45:40:15; Raw Material 2: a natural gas with molar ratio of CH₄ as 75.17%, H₂S as 36g/m³, sulfur (thiols) 500mg/m³ , other gases as 22.28%.
   (2) Charge Raw Material 1 into the feeding device A of the flow injection feeding system, Charge Raw Material 2 into the feeding device B;
   (3) Set experimental procedure, The parameters for the first part of the experimental procedure are set as follows: feeding device temperature is at 25°C, reactor temperature is at 25°C, shaft bearing temperature is at 50°C, rotation speed is at 8000 RPM, volume ratio of liquid to gas is 1:10, total flow rate is 0.5ml/min; The parameters for the second part of the experimental procedure are the same with those of the first part, except volume ratio of liquid to gas is 1:5, total flow rate is 0.5ml/min; the parameters for the third part of the experimental procedure are the same with those of the first part, except volume ratio of liquid to gas is 1:1.
   (5) Run the experimental procedure, and after successful system self-examination, mixing starts without any interruption during the mixing.
   (6) Collect outflow gases respecitvely for each part of the procedure and have them quantitatively analyzed through MS.
   (7) Preparation is completed.
      The aqueous solution of cyclobutyl sulfone and methyldiethanolamine, used as desulfurizer, has two functions of chemical absorption and physical absorption, and can further partially remove organic sulfides (average removing ratio of thiol is up to above 75%). Methyldiethanolamine has a good selectivity for absorping H₂S. It is expected to reduce the mass concentration of H₂S to 7mg/m³ and thiol to 16mg/m³ through this method.

## Claims

**1.** An apparatus for processing materials, comprising a working part and a driving part, wherein
said working part comprises a first element and a second element arranged within said first element,
a containing chamber for storing materials to be processed is formed by the gap between said first element and said second element,
said second element is driven by said driving part to rotate relatively to said first element,
**characterized in that**,
the surface of said first element or said second element toward said containing chamber is non-smooth.

**2.** The apparatus of claim 1, wherein said non-smooth surface of said first element or said second element is a disturbing part which can produce forces parallel to the axis of said first element.

**3.** The apparatus of claim 2, wherein said disturbing part is formed integrally on or attached to said surface of said first element or said second element.

**4.** The apparatus of claim 2, wherein said disturbing part is protruding or recessed.

**5.** The apparatus of claim 2, wherein said first element is capable of rotating.

**6.** The apparatus of claim 2, wherein said disturbing part comprises at least one continuous equi-spaced stripe.

**7.** The apparatus of claim 2, wherein said disturbing part comprises one selected from the group consisting of at least one continuous stripe, an array of a plurality of dots, and at least one discontinuous stripe.

**8.** The apparatus of claim 2, wherein the sectional shape of said disturbing part involves at least one selected from the group consisting of triangle, trapezoid, square, and any other polygons, semicircle and semiellipse.

**9.** The apparatus of claim 2, wherein said disturbing part comprises at least one selected from the group consisting of a continuous stripe, an array of a plurality of dots, and a discontinuous stripe, which are arranged on the surface of the second element randomly or in regular order.

**10.** The apparatus of claim 2, wherein said disturbing part comprises at least one selected from the group consisting of at least one equi-spaced stripe, a plurality of equi-spaced dots, at least one unequi-spaced stripe, and a plurality of unequi-spaced dots.

**11.** The apparatus of claim 4, wherein the protruding extent or the recessed extent of said disturbing part on the surface of said first element or said second element is in the range of 1%-300% of the average thickness of said containing chamber.

**12.** The apparatus of claim 11, wherein the protruding extent or the recessed extent of said disturbing part is in the range of 5-100% of the average thickness of said containing chamber.

**13.** The apparatus of claim 2, wherein said disturbing part comprises less than 50% of the total surface area of said first element or said second element.

**14.** The apparatus of claim 13, wherein said disturbing part comprises 10%-40% of the total surface area of said first element or said second element.

**15.** The apparatus of claim 2, wherein the trend direction of said disturbing part is intersected with the axis of said first element or said second element.

**16.** The apparatus of claim 1, wherein the thickness of said containing chamber is 1000 microns or 2000 microns or 3000 microns.

**17.** The apparatus of claim 1, wherein the thickness of said containing chamber is 50-80 microns or 80-120 microns.

**18.** The apparatus of claim 1, wherein the thickness of said containing chamber is 120-130 microns or 130-200 microns.

**19.** The apparatus of claim 1, wherein the thickness of said containing chamber is 200-350 microns or 350 microns.

**20.** The apparatus of claim 1, wherein the rotation speed of said second element is equal to or higher than 3000 rounds per minute.

**21.** The apparatus of claim 1, wherein the materials fed into said containing chamber for being processed are flowable.

**22.** An apparatus for processing materials, comprising a working part and a driving part, wherein
said working part comprises a first element and a second element arranged within said first element,
a containing chamber for storing materials to be processed is formed by the gap between said first element and said second element,
said first element is driven by said driving part to rotate relatively to said second element,
**characterized in that**,
the surface of said first element or said second element toward said containing chamber is non-smooth.

**23.** A method for processing materials, comprising the steps of:
providing at least two materials;
providing a containing chamber, which is formed by a first element and a second element arranged within said first element, wherein said second element can rotate relatively to said first element under the action of external force, and the surface of said first element or said second element toward the containing chamber is non-smooth; and
feeding said materials into said containing chamber to be processed.

**24.** The method of claim 23, wherein said materials are all flowable.

**25.** The method of claim 23, wherein said processing comprises at least one selected from the group consisting of uniformization, dispersion, emulsification, micro-emulsification, extraction, reaction, preparation of materials.

**26.** The method of claim 25, wherein said emulsification applies one or more processes selected from normal phase emulsification process and reverse phase emulsification process.

**27.** The method of claim 25, wherein the emulsification system used in said emulsification process includes one or more systems selected from triphasic emulsification system and quadriphasic emulsification system.

**28.** The method of claim 27, wherein the oil solvent used in said emulsification system comprises one selected from C₆-C₈ alkane or cycloalkane; the emulsifying agent used in said emulsification system comprises one or more selected from ionic surfactants and non-ionic surfactants.

**29.** The method of claim 25, wherein said micro-emulsification applies one or more processes selected from normal phase micro-emulsification process and reverse phase micro-emulsification process.

**30.** The method of claim 25, wherein the micro-emulsification system used in said micro- emulsification process includes one or more systems selected from triphasic emulsification system and quadriphasic emulsification system.

**31.** The method of claim 30, wherein the oil solvent used in said micro-emulsification system includes one selected from C₆-C₈ alkane or cycloalkane; the emulsifying agent used in said micro-emulsification system includes one selected from ionic surfactants and non-ionic surfactants.

**32.** The method of claim 25, wherein said extraction applies one or more processes selected from solvent extraction and complexation extraction.

**33.** The method of claim 32, wherein the complexing agent used in said complexation extraction meets at least one of the following requirements:
(a) Having corresponding functional group, and the associated bonding energy thereof with the solute to be separated shall be at a required amount so as to easily form complex compound and achieve phase transfer;
(b) Association bond energy can not be too high, so that the complex compound easily fulfills converse reaction in the second step and the complexing agent easily regenerates;
(c) In the process of complexing reaction and solute separation, the amount of water extraction by complexing agent shall be as little as possible or water is easily wiped off from solvent with the help of complexing agent;
(d) In order to avoid irreversible loss, there shall be no other secondary reaction in the process of complexation extraction, and complexing agent shall be thermally stable and not easy to decompose and degrade.

**34.** The method of claim 32, wherein the cosolvent and diluter used in said complexation extraction meets at least one of the following requirements:
(a) As good solvents for the complexing agent, said cosolvent and said diluter shall promote the formation of the complex compound and achievement of phase transfer;
(b) Said cosolvent and said diluter can adjust viscosity, density and interfacial tension of mixed extracting agent so as to easily implement liquid to liquid extraction;
(c) Said diluter can decrease extracting amount of water.

**35.** The method of claim 25, wherein the extracting phase or extracting agent used in said extraction process comprises ionic liquid.

**36.** The method of claim 35, wherein said extraction method with ionic liquids as extracting phase or extracting agent is suitable for extracting organic substances from crude oil or extracting organic substances or metallic ions from waste water.

**37.** The method of claim 36, wherein said organic substances to be extracted comprise one or more selected from the group consisting of aromatic hydrocarbon and their derivatives, organic carboxylic acid compounds, organic sulfonic acid compounds, organic sulfur compounds, and organic amine compounds present in oil or waste water; and said metallic ions are heavy metallic ions including one or more of Ni²⁺ Cu²⁺ Ag⁺, Au²⁺ Hg²⁺ Pt²⁺, Pb²⁺ Cr³⁺, Cd²⁺ Mn²⁺

**38.** The method of claim 35, wherein said ionic liquid shall meet at least one of the following requirements:
(a) In liquid state at normal temperature and stable in the air;
(b) As slight solubility as possible in crude oil or water.

**39.** The method of claim 25, wherein said reaction includes one or more of liquid-liquid reaction, gas-liquid reaction, polymerization, and oxidization-desulfurization reaction.

**40.** The method of claim 39, wherein any kind of said two liquids involved in said liquid-liquid reaction can be a pure liquid or a mixture of several liquids.

**41.** The method of claim 39, wherein said liquid-liquid reaction involves one or more selected from the group consisting of hydrolytic reaction, double decomposition reaction, neutralization reaction, ion exchange reaction, redox reaction, complexation reaction, complex reaction , chelation reaction , halogenating reaction , nitration reaction, cyanation reaction, epoxidation reaction, diazo reaction, alkylation reaction, esterification, condensation reaction, Fridel-Craft reaction, polymerization.

**42.** The method of claim 39, wherein said polymerization includes mixing active fluids to conduct anionic polymerization in which at least one of said active fluids comprises at least one kind of (methyl)acrylic acid monomer.

**42.** The method of claim 39, wherein said oxidization-desulfurization reaction redox reaction of active fluids containing an oxidant in acidic medium, in which at least one of said active fluid contains at least one sulphur-containing compound.

**43.** The method of claim 42, wherein said sulphur-containing includes one selected from dialkyl substituted sulfides, dialkyl substituted thiophene and its derivatives , alkyl substituted benzothiophene and its derivatives , and alkyl substituted dibenzothiophene and its derivatives ; said alkyl includes one selected from methyl, ethyl, propyl, n-butyl, t-butyl, ethyl hexyl, and nonyl; said oxidant includes one selected from peroxide and other oxide ; and said acid medium includes one or more selected from inorganic acids or organic acids.

**44.** The method of claim 42, wherein said oxidant includes one or more selected from the group consisting of H₂O₂, O₃, N₂O, ClO₂, ClO-, (CH₃)₂CO₂, t-BuOOH, C₅H₁₁NO₂, ClO₃-, HSO₃-, and IO₄-.

**45.** The method of claim 42, wherein said acid medium includes one or more selected from the group consisting of hydrochloric acid, hydrobromic acid, hydroiodic acid, sulphuric acid, nitric acid, phosphoric acid, boracic acid, carbonic acid, methanoic acid, acetic acid, trifluoroacetic acid.

**46.** The method of claim 25, wherein said reaction includes one or more selected from the group consisting of hydrogenation reaction, hydroformylation reactions, carbonylation reactions, dimerization and oligomerization of olefins, Diels-Alder reactions, acylation reactions, Heck reactions, Suzuki reactions, Stille coupling reaction, Trost-Tsuji coupling reaction, allylation reaction, nucleophilic displacement reaction, Baylis-Hillman reaction, Wittig reaction, free radicals cycloaddition reactions, asymmetric ring opening reaction of epoxides, continuous multistep reactions, and enzyme catalyzed organic reaction and asymmetric synthesis reaction.

**47.** The method of claim 25, wherein said preparation is the preparation of ionic liquid.

**48.** The method of claim 47, wherein general reaction formula for said preparation of ionic liquid is as follows: 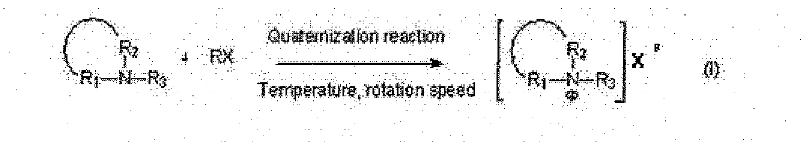 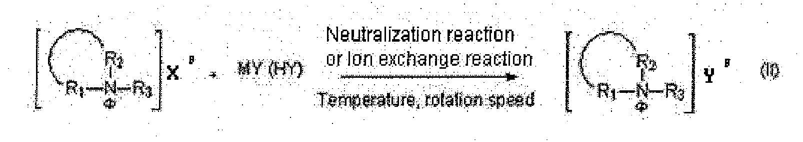 in which
R denotes one of methyl ( CH₃), ethyl ( C₂H₅), propyl (C₃H₇), butyl (C₄H₉) or other linear or branched alkyls with 1-20 carbons, and also can denote one of methoxy group, ethoxy group, propoxy group, butoxy group or other linear or branched alkoxy with 1-20 carbons;
R₁, R₂ respectively denotes one of methyl( CH₃ ), ethyl( C₂H₅ ), propyl( C₃H₇ ), butyl ( C₄H₉) or other linear or branched alkyls with 1-20 carbons;
R₃ denotes one of H (hydrogen), methyl ( CH₃), ethyl (C₂H₅), propyl (C₃H₇), butyl ( C₄H₉) or other linear or branched alkyls with 1-20 carbons;
X denotes one of chlorine atom ( Cl ), bromine atom ( Br ), iodine atom (I) ;
Y denotes one of PF₆⁻, BF₄⁻, CH₃SO₃⁻, CH₃CO₃⁻, N (SO₂CF₃) ₂⁻;
M denotes one ofNa, K, Ag or NH₄⁺;
H denotes hydrogen atom; and
N denotes nitrogen atom.

**49.** The method of claim 48, wherein in formula (I) and formula (II), When R₃ is H, R₁ and R₂ can substitute separately or together form into various rings, and the possible structures are as follows:
Five-membered heterocycles and benzoheterocycles thereof 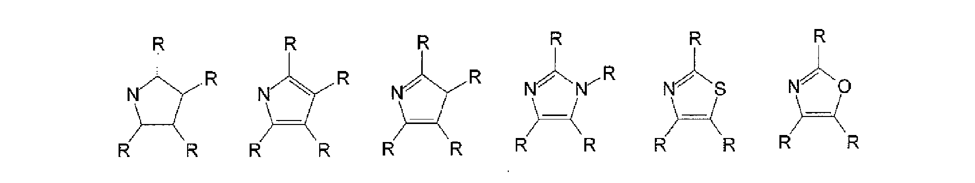 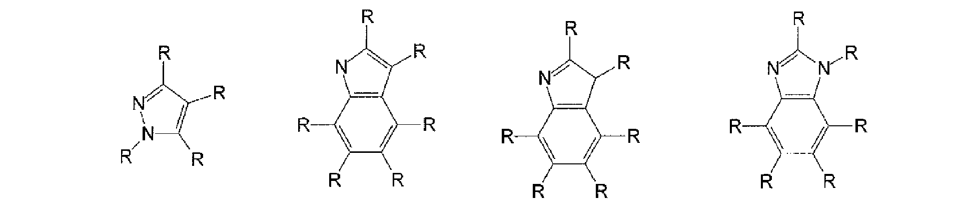 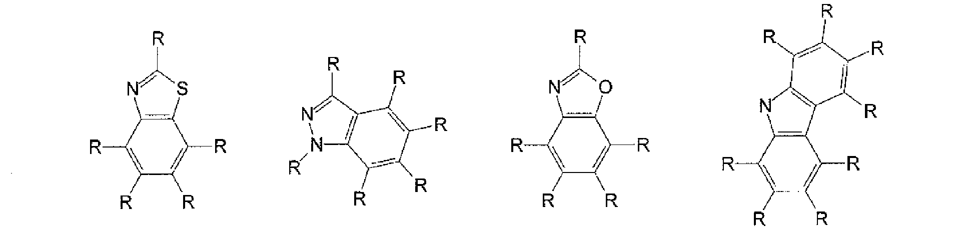 in which
R denotes H (hydrogen), methyl (CH₃), ethyl (C₂H₅) or other linear or branched alkyls with 1-10 carbons; R can be same or different, and the adjacent R groups can substitute separately or together form into ring;
Six-membered heterocycles and benzoheterocycles thereof 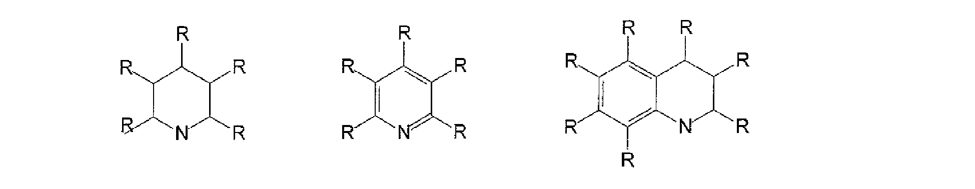 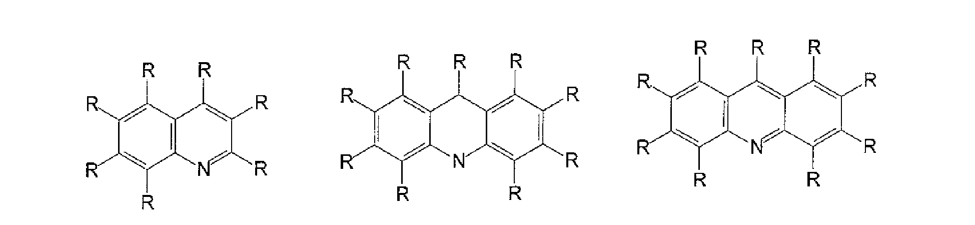 in which
R denotes H (hydrogen), methyl (CH₃), ethyl (C₂H₅) or other linear or branched alkyls with 1-10 carbons; R can be same or different, and the adjacent R groups can substitute separately or together form into ring.

**50.** The method of claim 25, wherein said preparation includes one or more selected from the group consisting of preparation material through chemical reaction or green chemical reaction with ionic liquids as solvent or catalyst, preparation inorganic substance, organic substance, medicament, catalyst, macromolecular polymer.

**51.** The method of claim 50, wherein said chemical reaction or green chemical reaction system involves any one selected from the group consisting of hydrogenation reaction, hydroformylation reaction, carbonylation reaction, dimerization and oligomerization of olefins, Diels-Alder reaction, Friedel-Crafts reaction, acylation reaction, selective alkylation reaction, Heck reaction, Suzuki reaction, Stille coupling reaction, Trost-Tsuji coupling reaction, allylation reaction, oxidation reaction, nucleophilic displacement reaction, Baylis-Hillman reaction, Wittig reaction, Free radicals cycloaddition reaction, asymmetric ring opening reaction of epoxides, continuous multistep reaction, and enzyme catalyzed organic reaction and asymmetric synthesis reaction.

**52.** The method of claim 23, wherein said processing includes any one of solvent extraction, centrifugal separation, filtration, vacuum drying, column chromatography separation.

**53.** The method of claim 52, wherein said column chromatography separation includes one selected from absorption chromatography separation, gel permeation chromatography separation, and ion exchange chromatography separation; the stuffing used includes one of silicon gel, alumina, silicon alkylation series gels, cellulose, and polyamide.

**54.** The method of claim 23 further comprising the step of analyzing resultant products.

**55.** The method of claim 54, wherein the method for analyzing resultant products includes one or more selected from the group consisting of Capillary Electrophoresis (CE), Gas Chromatography (GC), Liquid Chromatography (LC), Inductive Coupled Plasma Emission Spectrometer ( ICP ), Mass Spectrometry ( MS or QMS ), Fourier Transform Infrared Spectroscopic (FTIR) analysis, Nuclear Magnetic Resonance (NMR), X-ray Diffractive (XRD) analysis, Optical Microscopical image analysis ( OM ), Scanning Electron Microscopical image analysis (SEM), Atom Force Microscopical image analysis (AFM), Transmission Electron Microscopical image analysis ( TEM ) .

**56.** The method of claim 23, wherein said non-smooth surface of said first element or said second element is a disturbing part which can produce forces parallel to the axis of said first element.

**57.** The method of claim 56, wherein said disturbing part comprise at least one selected from the group consisting of a protruding element, a recessed element, a continuous equi-spaced stripe, a continuous stripe, an array consisting of a plurality of dots, an discontinuous stripe, an equi-spaced stripe, a plurality of equi-spaced dots, an unequi-spaced stripe, and a plurality of unequi-spaced dots.

**58.** The method of claim 23, wherein the thickness of said containing chamber is on the order of micrometers.

**59.** A method for processing ionic liquids, comprising the following steps:
providing at least two kinds of ionic liquids;
providing a containing chamber, which is formed by a first element and a second element arranged within the first element, wherein the second element can rotate relatively to the first element under the action of external force; and
feeding said ionic liquids into said containing chamber to be processed.

**60.** The method of claim 59, wherein said processing includes at least one of extraction, reaction, preparation of ionic liquid.

**61.** The method of claim 60, wherein the thickness of said containing chamber is on the order of micrometers.

**62.** A method for desulfurizing sulfur-containing material, comprising the steps of:
providing a desulfurizer and said sulfur-containing material;
providing a containing chamber, which is formed by a first element and a second element arranged within said first element, wherein said second element can rotate relatively to said first element under the action of external force;
feeding the desulfurizer and the sulphur-containing material into said containing chamber to be processed.

**63.** The method of claim 62, wherein said sulfur-containing material is sulfur-containing gas, sulfur-containing liquid or sulfur-containing crude oil.

**64.** The method of claim 62, wherein said desulfurizer comprises an oxidant.

**65.** The method of claim 64, wherein said oxidant comprises a peroxide and other oxides.

**66.** The method of claim 64, wherein said oxidant comprises one or more selected from the group consisting of H₂O₂, O₃, N₂O ClO₂, ClO⁻, (CH₃)₂CO₂, t-BuOOH, C₅H₁₁NO₂, ClO₃⁻, HSO₃⁻ and IO₄⁻.

**67.** The method of claim 64, wherein said sulfur-containing material includes acidic gas, and said desulfurizer includes an alkaline liquid.

**68.** The method of claim 67, wherein said alkaline liquid comprises at least one alcohol amine compound or hydroxide.

**69.** The method of claim 68, wherein said alcohol amine compound is one of monoethanolamine, diethanolamine, diisopropanolamine, N-methyl diethanolamine, N-ethyl diethanolamine, N-propyl diethanolamine, N-butyl diethanolamine; said hydroxide is one of sodium hydroxide, potassium hydroxide, calcium hydroxide, and ammonium hydroxide.
